(19) **Europäisches Patentamt / European Patent Office / Office européen des brevets**

(11) **EP 4 336 207 B1**

(12) **EUROPEAN PATENT SPECIFICATION**

(45) Date of publication and mention of the grant of the patent:
**29.04.2026 Bulletin 2026/18**

(21) Application number: **22819789.3**

(22) Date of filing: **21.01.2022**

(51) International Patent Classification (IPC):
**G01S 5/06** (2006.01)     **G01S 5/12** (2006.01)

(52) Cooperative Patent Classification (CPC):
**G01S 5/06; G01S 5/12;** G01S 5/02213;
G01S 5/02695; G01S 5/04; G01S 2205/01

(86) International application number:
**PCT/JP2022/002083**

(87) International publication number:
**WO 2022/259598 (15.12.2022 Gazette 2022/50)**

(54) **POSITIONING DEVICE**

POSITIONIERVORRICHTUNG

DISPOSITIF DE POSITIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2021 PCT/JP2021/022231**

(43) Date of publication of application:
**13.03.2024 Bulletin 2024/11**

(73) Proprietor: **MITSUBISHI ELECTRIC CORPORATION**
**Chiyoda-ku**
**Tokyo 100-8310 (JP)**

(72) Inventors:
• **YOROZUYA, Tomoaki**
  **Tokyo 100-8310 (JP)**
• **TAKAHASHI, Yoshiki**
  **Tokyo 100-8310 (JP)**
• **AMISHIMA, Takeshi**
  **Tokyo 100-8310 (JP)**
• **TAKAHASHI, Ryuhei**
  **Tokyo 100-8310 (JP)**

(74) Representative: **Pfenning, Meinig & Partner mbB Patent- und Rechtsanwälte**
**Joachimsthaler Straße 10-12**
**10719 Berlin (DE)**

(56) References cited:
WO-A1-2020/001821     JP-A- 2009 198 435
JP-A- 2011 247 596     JP-A- 2012 083 264
JP-A- 2014 044 160     JP-A- H08 262 121

• DARIO BENVENUTI: "Genetic Algorithms for PRI ambiguity resolution in Passive Emitter Tracking", RADAR CONFERENCE, 2009. EURAD 2009. EUROPEAN, IEEE, PISCATAWAY, NJ, USA, 30 September 2009 (2009-09-30), pages 117 - 120, XP031558455, ISBN: 978-1-4244-4747-3
• LI ZHENQIANG ET AL: "A method to eliminate TDOA ambiguity based on FDOA and FDOA-rate", 2015 INTERNATIONAL CONFERENCE ON WIRELESS COMMUNICATIONS & SIGNAL PROCESSING (WCSP), IEEE, 15 October 2015 (2015-10-15), pages 1 - 5, XP032820559, DOI: 10.1109/WCSP.2015.7341154

## Description

TECHNICAL FIELD

The present disclosure technology relates to a positioning device.

BACKGROUND ART

A technique for measuring a position of a radio wave source on the ground is disclosed. For example, Non Patent Literature 1 discloses a technique in which radio waves transmitted from a radio wave source whose position is unknown are received by a plurality of satellites, and positioning is performed on the basis of a time difference of arrival (hereinafter referred to as "TDOA") and a Doppler frequency (frequency difference of arrival, hereinafter referred to as "FDOA"). Further techniques for measuring a position of a radio wave source are described in Non Patent Literature 2 and 3. Non Patent Literature 2 discloses a passive emitter tracking system using genetic algorithms to solve pulse repetition interval ambiguity and in particular discloses a positioning device, comprising at least three receiving antennas, a TDOA calculating unit to calculate a TDOA by referring to peaks of cross-correlations, the cross-correlations being calculated for all combinations to choose any two from the reception signals of the receiving antennas, a TDOA positioning processing unit to perform TDOA positioning by referring to the TDOA, a DOA estimation processing unit to estimate a DOA from a reception signal received by an array antenna of at least one receiver, a DOA positioning processing unit to perform DOA positioning by referring to the DOA, and an ambiguity handling unit to select one based on the result calculated by the DOA positioning processing unit from a plurality of positioning results calculated by the TDOA positioning processing unit. Non Patent Literature 3 further discloses a method of eliminating ambiguity of TDOA in passive localization of emitters based on FDOA and FDOA-rate.

CITATION LIST

NON PATENT LITERATURE

Non Patent Literature 1: D. P. Haworth et al., Interference Localization For Eutelsat Satellites -The First European Transmitter Location System, International Journal of Satellite Communications, Vol.15, 155-183, 1997
Non Patent Literature 2: Dario Benvenuti, Genetic Algorithms for PRI ambiguity resolution in Passive Emitter Tracking, 2009 European Radar Conference (EuRAD), Rome, Italy, 2009, 117-120
Non Patent Literature 3: Li Zhenquiang et al, A method to eliminate TDOA ambiguity based on FDOA and FDOA-rate, 2015 International Conference on Wireless Communications & Signal Processing (WCSP), Nanjing, China, 2015, 1-5,

SUMMARY OF INVENTION

TECHNICAL PROBLEM

In the positioning exemplified in Non Patent Literature 1, a pulse radar wave is used as a transmission wave of a positioning target. The pulse radar wave is inherently subject to ambiguity of TDOA and FDOA (both are hereinafter collectively referred to as "TDFD"). In positioning using a plurality of satellites, a plurality of positioning ambiguities occur, and thus positioning accuracy deteriorates.

An object of the present disclosure technology is to solve the above problem, and provides a positioning device capable of positioning a positioning target with high accuracy even when a pulse radar wave is used as a transmission wave of the positioning target.

SOLUTION TO PROBLEM

This object is achieved by a positioning device according to claim 1.

ADVANTAGEOUS EFFECTS OF INVENTION

Since the positioning device according to the present disclosure technology has the above configuration, the positioning device according to the present disclosure technology can position the positioning target with high accuracy even when a pulse radar wave is used as a transmission wave of the positioning target.

BRIEF DESCRIPTION OF DRAWINGS

FIG. 1 is a conceptual diagram illustrating a concept of positioning.
FIG. 2 is a hardware configuration diagram in a case where a part of a positioning device according to the present disclosure technology is implemented by a program executed on a processor.
FIG. 3 is a functional block diagram illustrating a configuration of the positioning device according to a first embodiment not according to the invention.
FIG. 4 is a flowchart illustrating a processing flow of the positioning device according to the first embodiment.
FIG. 5 is a functional block diagram illustrating a configuration of a positioning device according to a second embodiment not according to the invention.
FIG. 6 is a flowchart illustrating a processing flow of the positioning device according to the second embodiment.
FIG. 7 is a functional block diagram illustrating a configuration of a positioning device according to a third embodiment not according to the invention .
FIG. 8 is a flowchart illustrating a processing flow of the positioning device according to the third embodiment.
FIG. 9 is a functional block diagram illustrating a configuration of a positioning device according to a fourth embodiment not according to the invention.
FIG. 10 is a flowchart illustrating a processing flow of the positioning device according to the fourth embodiment.
FIG. 11 is a functional block diagram illustrating a configuration of a positioning device according to a fifth embodiment not according to the invention.
FIG. 12 is a flowchart illustrating a processing flow of the positioning device according to the fifth embodiment.
FIG. 13 is a schematic diagram Part 1 illustrating an effect of the positioning device according to the fifth embodiment.
FIG. 14 is a schematic diagram Part 2 illustrating an effect of the positioning device according to the fifth embodiment.
FIG. 15 is a functional block diagram illustrating a configuration of a positioning device according to a sixth embodiment of the invention.
FIG. 16 is a flowchart illustrating a processing flow of the positioning device according to the sixth embodiment.
FIG. 17 is a functional block diagram illustrating a configuration of a positioning device according to a seventh embodiment not according to the invention.
FIG. 18 is a flowchart illustrating a processing flow of the positioning device according to the seventh embodiment.
FIG. 19 is a conceptual diagram illustrating a presence expected area in a TDOA-FDOA space.
FIG. 20 is a flowchart illustrating a processing flow of a positioning device according to an eighth embodiment not according to the invention.
FIG. 21A is a graph plotting positioning points in a TDOA-FDOA space. FIG. 21B is a graph (enlarged version) plotting positioning points in the TDOA-FDOA space. FIG. 21 (either of FIG. 21A and FIG. 21B) is a graph plotting positioning points in a TDOA-FDOA space.
FIG. 22A is a plot on a map comparing a variation in positioning by DOA and a variation in positioning by TDFD. FIG. 22B is a plot (enlarged version) on a map comparing a variation in positioning by DOA and a variation in positioning by the TDFD. FIG. 22 (either of FIG. 22A and FIG. 22B) is a plot on a map comparing a variation in positioning by DOA and a variation in positioning by TDFD.
FIG. 23 is a schematic diagram illustrating an ECEF coordinate system and a ground surface coordinate system.
FIG. 24 is a flowchart illustrating a processing flow of a positioning device according to a ninth embodiment not according to the invention.
FIG. 25 is a flowchart illustrating a processing flow of a positioning device according to a tenth embodiment not according to the invention.

DESCRIPTION OF EMBODIMENTS

The positioning devices according to the first to fifth and seventh to ninth embodiments do not comprise all of the features of the present invention. These embodiments serve as examples to facilitate understanding of the present invention, which is described more closely in the sixth embodiment. Operation of a positioning device according to the present disclosure technology will be apparent from the following description of positioning the position of a radio wave source using three satellites.

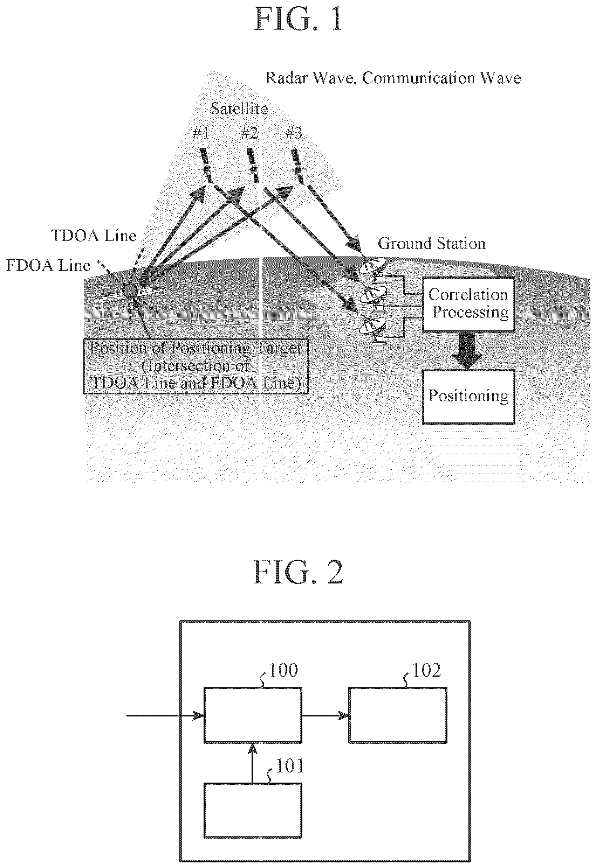

FIG. 1 is a conceptual diagram illustrating a concept of positioning. As illustrated in FIG. 1, the positioning device performs correlation processing on reception signals from a plurality of satellites. The positioning device illustrated in FIG. 1 performs two-dimensional correlation calculation on, for example, a reception signal from satellite #1 and a reception signal from satellite #2. The two-dimensional correlation calculation is also performed on the reception signal from satellite #2 and a reception signal from satellite #3.

The positioning of the positioning device illustrated in FIG. 1 is calculated on the basis of a result of correlation processing. First, the positioning device illustrated in FIG. 1 calculates a TDFD from the peak of the two-dimensional correlation calculation. The positioning point is obtained from the calculated TDFD.

The following is an expression for calculating the TDFD using the reception signals from satellites #1 and #2.

$$TDOA_{12} = \frac{1}{c}\|\boldsymbol{p} - \boldsymbol{p}_{s1}\| - \frac{1}{c}\|\boldsymbol{p} - \boldsymbol{p}_{s2}\| \quad \dots (1)$$

$$FDOA_{12} = \frac{1}{\lambda}\frac{\boldsymbol{v}_{s1}^T(\boldsymbol{p} - \boldsymbol{p}_{s1})}{\|\boldsymbol{p} - \boldsymbol{p}_{s1}\|} - \frac{1}{\lambda}\frac{\boldsymbol{v}_{s2}^T(\boldsymbol{p} - \boldsymbol{p}_{s2})}{\|\boldsymbol{p} - \boldsymbol{p}_{s2}\|} \quad \dots (2)$$

Expression (1) is an expression for calculating the TDOA from the reception signals from the satellites #1 and #2. The subscript "12" indicates a calculation result using the information from the satellites #1 and #2. p is a three-dimensional position vector of a positioning target. $p_{si}$ (i = 1, 2, 3) is a three-dimensional position vector for the i-th satellite. c represents the speed of light. In addition, λ represents a transmission wavelength of the positioning target.

Expression (2) is an expression for calculating the FDOA from the reception signals from the satellites #1 and #2. $v_{si}$ (i = 1, 2, 3) is a three-dimensional velocity vector for the i-th satellite. The superscript T represents transposition of interchanging rows and columns.

The following is an expression for calculating the TDFD using the reception signals from the satellites #2 and #3.

$$TDOA_{23} = \frac{1}{c}\|\boldsymbol{p} - \boldsymbol{p}_{s2}\| - \frac{1}{c}\|\boldsymbol{p} - \boldsymbol{p}_{s3}\| \quad \dots (3)$$

$$FDOA_{23} = \frac{1}{\lambda}\frac{\boldsymbol{v}_{s2}^T(\boldsymbol{p} - \boldsymbol{p}_{s2})}{\|\boldsymbol{p} - \boldsymbol{p}_{s2}\|} - \frac{1}{\lambda}\frac{\boldsymbol{v}_{s3}^T(\boldsymbol{p} - \boldsymbol{p}_{s3})}{\|\boldsymbol{p} - \boldsymbol{p}_{s3}\|} \quad \dots (4)$$

Expression (3) is an expression for calculating the TDOA from the reception signals from satellites #2 and #3. In addition, Expression (4) is an expression for calculating the FDOA from the reception signals from the satellites #2 and #3. A subscript "23" indicates a calculation result using the information from the satellites #2 and #3.

The following is a constraint condition that the positioning target is on the ground surface.

$$R_E = \|\boldsymbol{p} - \boldsymbol{p}_E\| \quad \dots (5)$$

$R_E$ indicates the radius of the earth. The $P_E$ is a three-dimensional position vector about the center of the earth.

Positioning of the position of the radio wave source is performed by solving simultaneous equations expressed by Expressions (1) to (5). Since Expressions (1) to (5) are nonlinear equations, the simultaneous equations are obtained numerically, not analytically. As a numerical solution of the simultaneous equations, a Newton method, a successive approximation method, or the like may be used.

In order to improve the visibility of the numerical solution, it is considered that the right sides of Expressions (1) to (5) are functions for the three-dimensional position vector p for the positioning target. The following are functions related to Expressions (1) to (5).

$$f_{12}(\boldsymbol{p}) := \|\boldsymbol{p} - \boldsymbol{p}_{s1}\| - \|\boldsymbol{p} - \boldsymbol{p}_{s2}\| \quad \dots (6)$$

$$f_{23}(\boldsymbol{p}) := \|\boldsymbol{p} - \boldsymbol{p}_{s2}\| - \|\boldsymbol{p} - \boldsymbol{p}_{s3}\| \quad \dots (7)$$

$$g_{12}(\boldsymbol{p}) := \frac{\boldsymbol{v}_{s1}^T(\boldsymbol{p} - \boldsymbol{p}_{s1})}{\|\boldsymbol{p} - \boldsymbol{p}_{s1}\|} - \frac{\boldsymbol{v}_{s2}^T(\boldsymbol{p} - \boldsymbol{p}_{s2})}{\|\boldsymbol{p} - \boldsymbol{p}_{s2}\|} \quad \dots (8)$$

$$g_{23}(\boldsymbol{p}) := \frac{\boldsymbol{v}_{s2}^T(\boldsymbol{p} - \boldsymbol{p}_{s2})}{\|\boldsymbol{p} - \boldsymbol{p}_{s2}\|} - \frac{\boldsymbol{v}_{s3}^T(\boldsymbol{p} - \boldsymbol{p}_{s3})}{\|\boldsymbol{p} - \boldsymbol{p}_{s3}\|} \quad \dots (9)$$

$$h(\boldsymbol{p}) := \|\boldsymbol{p} - \boldsymbol{p}_E\| \quad \dots (10)$$

Expressions (6) to (10) are partially differentiated by the three-dimensional position vector p of the positioning target.

$$\nabla_p f_{12} = \frac{(\boldsymbol{p} - \boldsymbol{p}_{s1})}{\|\boldsymbol{p} - \boldsymbol{p}_{s1}\|} - \frac{(\boldsymbol{p} - \boldsymbol{p}_{s2})}{\|\boldsymbol{p} - \boldsymbol{p}_{s2}\|} \quad \dots (11)$$

$$\nabla_p f_{23} = \frac{(\boldsymbol{p} - \boldsymbol{p}_{s2})}{\|\boldsymbol{p} - \boldsymbol{p}_{s2}\|} - \frac{(\boldsymbol{p} - \boldsymbol{p}_{s3})}{\|\boldsymbol{p} - \boldsymbol{p}_{s3}\|} \quad \dots (12)$$

$$\nabla_p g_{12} = \frac{\boldsymbol{v}_{s1}}{\|\boldsymbol{p} - \boldsymbol{p}_{s1}\|} - \frac{\boldsymbol{v}_{s1}^T(\boldsymbol{p} - \boldsymbol{p}_{s1})}{\|\boldsymbol{p} - \boldsymbol{p}_{s1}\|}(\boldsymbol{p} - \boldsymbol{p}_{s1})$$
$$- \frac{\boldsymbol{v}_{s2}}{\|\boldsymbol{p} - \boldsymbol{p}_{s2}\|} - \frac{\boldsymbol{v}_{s2}^T(\boldsymbol{p} - \boldsymbol{p}_{s2})}{\|\boldsymbol{p} - \boldsymbol{p}_{s2}\|}(\boldsymbol{p} - \boldsymbol{p}_{s2}) \quad \dots (13)$$

$$\nabla_p g_{23} = \frac{\boldsymbol{v}_{s2}}{\|\boldsymbol{p} - \boldsymbol{p}_{s2}\|} - \frac{\boldsymbol{v}_{s2}^T(\boldsymbol{p} - \boldsymbol{p}_{s2})}{\|\boldsymbol{p} - \boldsymbol{p}_{s2}\|}(\boldsymbol{p} - \boldsymbol{p}_{s2})$$
$$- \frac{\boldsymbol{v}_{s3}}{\|\boldsymbol{p} - \boldsymbol{p}_{s3}\|} - \frac{\boldsymbol{v}_{s3}^T(\boldsymbol{p} - \boldsymbol{p}_{s3})}{\|\boldsymbol{p} - \boldsymbol{p}_{s3}\|}(\boldsymbol{p} - \boldsymbol{p}_{s3}) \quad \dots (14)$$

$$\nabla_p h = \frac{\boldsymbol{p} - \boldsymbol{p}_E}{\|\boldsymbol{p} - \boldsymbol{p}_E\|} \quad \dots (15)$$

The numerical solution of the three-dimensional position vector p for the positioning target may be obtained, for example, by iteratively performing the following calculation.

$$\boldsymbol{p} = \boldsymbol{p} + \boldsymbol{A}^{-1}\Delta\boldsymbol{u} \quad \dots (16)$$

Here, A is a matrix represented by the following expression.

$$\boldsymbol{A} = \begin{bmatrix} \nabla_p f_{12}{}^T \\ \nabla_p f_{23}{}^T \\ \nabla_p g_{12}{}^T \\ \nabla_p g_{23}{}^T \\ \nabla_p h^T \end{bmatrix} \quad \dots (17)$$

In addition, Δu is a vector expressed by the following expression.

$$\Delta\boldsymbol{u} = \begin{bmatrix} c \cdot TDOA_{12} - f_{12} \\ c \cdot TDOA_{23} - f_{23} \\ \lambda \cdot FDOA_{12} - g_{12} \\ \lambda \cdot FDOA_{23} - g_{23} \\ R_E - h \end{bmatrix} \quad \dots (18)$$

A stop condition of the repetitive expression (16) may be, for example, that $| A^{-1}\Delta u |$ of the expression (16) becomes sufficiently small and is smaller than a predetermined threshold. In addition, the stop condition may be a condition that determines the upper limit of the number of iterative calculations and determines whether the number of iterations exceeds the upper limit.

First Embodiment not according to the invention

FIG. 2 is a hardware configuration diagram in a case where a part of the positioning device according to the present disclosure technology is implemented by a program executed on a processor. As illustrated in FIG. 2, the function of a positioning device according to a first embodiment may be implemented by software, firmware, or a combination of software and firmware. Software and firmware are described as programs and stored in the memory 101. A processor 100 implements the functions of the respective units by reading and executing the programs stored in the memory 101. That is, it can be said that this program causes a computer to execute the function of the positioning device according to the present disclosure technology. Here, the memory 101 may be, for example, a nonvolatile or volatile semiconductor memory such as a RAM, a ROM, a flash memory, an EPROM, or an EEPROM. Furthermore, the memory 101 may be a magnetic disk, a flexible disk, an optical disk, a compact disk, a mini disk, a DVD, or the like.

The function of the positioning device according to the first embodiment may be implemented by dedicated hardware. The hardware for implementing the function may be a processing circuit. The processing circuit may be, for example, a single circuit, a composite circuit, a programmed processor, a parallel programmed processor, an ASIC, an FPGA, or a combination thereof.

The processor 100 illustrated in FIG. 2 performs correlation processing. The correlation processing is, in other words, calculation of cross-correlation. Specifically, the processor 100 calculates TDOA generated when a plurality of satellites pass, and performs positioning. In addition, the processor 100 estimates the DOA from the reception signal received by an array antenna of one satellite, and performs positioning. Here, DOA is an acronym for Direction of Arrival, and means a direction of arrival. The positioning device according to the first embodiment can resolve the positioning ambiguity on the basis of the ambiguity of the TDOA by using the information of the positioning point estimated by the DOA.

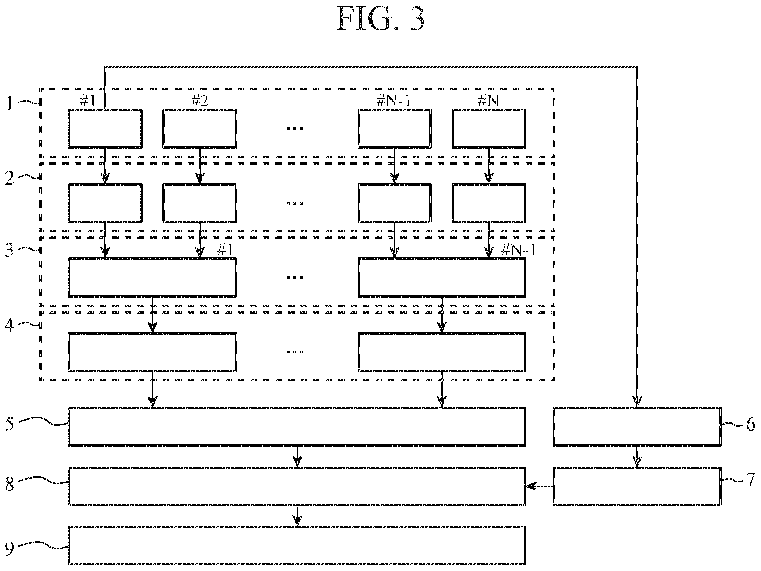

FIG. 3 is a functional block diagram illustrating a configuration of the positioning device according to the first embodiment. As illustrated in FIG. 3, the positioning device according to the first embodiment includes functional blocks of a receiving antenna 1, a receiving unit 2, a cross-correlation processing unit 3, a TDOA calculating unit 4, a TDOA positioning processing unit 5, a DOA estimation processing unit 6, a DOA positioning processing unit 7, an ambiguity handling unit 8, and a positioning result output unit 9.

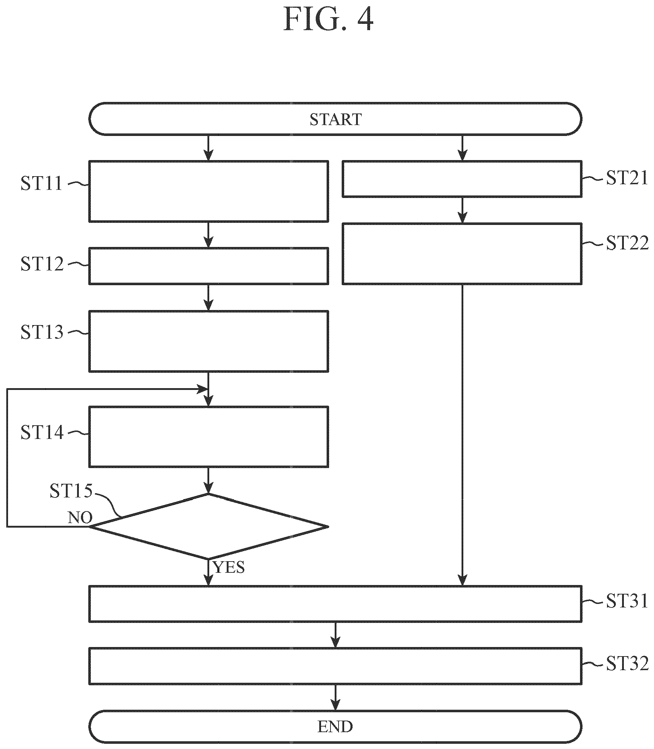

FIG. 4 is a flowchart illustrating a processing flow of the positioning device according to the first embodiment. As illustrated in FIG. **4,** the processing of the positioning device according to the first embodiment is roughly divided into three parts. The first part includes processing steps related to TDOA. The processing steps related to TDOA include a step (ST11) of calculating cross-correlation, a step (ST12) of detecting peaks, a step (ST13) of calculating TDOA, a step (ST14) of performing TDOA positioning, and a step (ST15) determining completion of positioning. The second part is a processing step related to DOA. The processing steps related to DOA include a step (ST21) of estimating the DOA and a step (ST22) of performing DOA positioning. The third part is a processing step utilizing the TDOA result and the DOA result. The processing steps here include a step (ST31) of selecting a closest positioning point and a step (ST32) of outputting a positioning result.

The cross-correlation processing unit 3 performs the step (ST11) of calculating cross-correlation. For example, in a case where the position of the radio wave source is measured by three satellites, the cross-correlation processing unit 3 performs the two-dimensional correlation calculation on the reception signal from the satellite #1 and the reception signal from the satellite #2. Similarly, the two-dimensional correlation calculation is also performed on the reception signal from satellite #2 and the reception signal from satellite #3. In a case where the position of the radio wave source is measured using more than three satellites, the cross-correlation processing unit 3 may perform the two-dimensional correlation calculation in all combinations or may perform the two-dimensional correlation calculation in some combinations.

The two-dimensional correlation calculation may use a cross-correlation function obtained by flipping the order of a signal array of one of convolution expressions for convoluting two signals. Specifically, the two-dimensional correlation function may be expressed by the following Expression.

$$C(\tau, f) = \int_{t=0}^{t=T} s_1(t)\, s_2{}^*(t-\tau)\mathrm{e}^{-j2\pi ft}\mathrm{d}t \quad \dots(19)$$

The TDOA calculating unit 4 performs the step (ST12) of detecting a peak for the output of the cross-correlation. When the transmission wave of the positioning target is a pulse radar wave, a plurality of peaks occur in the output of the cross-correlation. This plurality of peaks means that the ambiguity of TDOA occurs for each PRI. Here, PRI is an abbreviation of Pulse Repetition Interval, and represents a pulse repetition time of a pulse radar wave.

The TDOA calculating unit 4 performs the step (ST13) of calculating the TDOA on the basis of the detected peak.

The TDOA positioning processing unit 5 performs TDOA positioning on the basis of the calculated TDOA (step indicated by ST14 in FIG. 4). For example, in a case where the position of the radio wave source is measured by three satellites, the TDOA positioning processing unit 5 repeatedly performs the following calculation.

$$\boldsymbol{p}_k = \boldsymbol{p}_k + \boldsymbol{A}_k{}^{-1}\Delta\boldsymbol{u}_k t \quad \dots(20)$$

However, the subscript k (k = 1, 2, ... K) is for distinguishing the ambiguity of TDOA. K is the total number of ambiguities of the TDOA.

The above $A_k$ is a matrix represented by the following expression.

$$\boldsymbol{A}_k = \begin{bmatrix} \nabla_p f_{12}{}^T \\ \nabla_p f_{23}{}^T \\ \nabla_p h^T \end{bmatrix} \quad \dots(21)$$

The above $\Delta u_k$ is a vector expressed by the following expression.

$$\Delta\boldsymbol{u}_k = \begin{bmatrix} c\,TDOA_{12_k} - f_{12} \\ c\,TDOA_{23_k} - f_{23} \\ R_E - h \end{bmatrix} \quad \dots(22)$$

The stop condition of the repetitive expression (20) may be, for example, that $|A_k{}^{-1}\Delta u_k|$ of the expression (20) becomes sufficiently small and is smaller than a predetermined threshold. In addition, the stop condition may be a condition that determines the upper limit of the number of iterative calculations and determines whether the number of iterations exceeds the upper limit.

The DOA estimation processing unit 6 performs the step (ST21) of estimating a DOA. Specifically, the DOA estimation processing unit 6 estimates the DOA from the reception signal received by the array antenna of one satellite. As a method of estimating the DOA that is the direction of the radio wave source using the array antenna, a beamforming method or the like can be considered.

The DOA positioning processing unit 7 performs DOA positioning on the basis of the estimated DOA (step indicated by ST22 in FIG. 4). In order to distinguish from TDOA positioning, a vector x is used as a position of a positioning target obtained by DOA positioning. The following is an expression representing a true value of the position of the positioning target.

$$\chi = (\mathtt{Lon},\ \mathtt{Lat})^T \quad \dots(23)$$

Here, LON represents longitude, and LAT represents latitude. The vector x may be obtained by a least squares method or the like.

The processing performed by the DOA positioning processing unit 7 results in solving a problem expressed by the following mathematical expression.

$$\mathtt{find}\, \chi\, \mathtt{s.t.}\, \arg\min_{\chi} J(\chi, \boldsymbol{p}_{sat}) \quad \dots(24)$$

Here, $P_{sat}$ is a three-dimensional position vector of the satellite that estimates the DOA. J is an evaluation function using x and $P_{sat}$ as arguments. The evaluation function is also referred to as a cost function. The processing performed by the DOA positioning processing unit 7 results in obtaining the vector x that minimizes the evaluation function J.

In order to obtain the vector x that minimizes the evaluation function J, the DOA positioning processing unit 7 performs an iterative calculation described below.

$$G(\chi, p_{sat}) = \begin{pmatrix} \nabla_\chi Az(\chi, p_{sat})^T \\ \nabla_\chi El(\chi, p_{sat})^T \end{pmatrix} \quad \dots(25)$$

$$G(\hat{\chi}_m, p_{sat}) = G(\chi, p_{sat})|_{\chi=\hat{\chi}_m} \quad \dots(26)$$

$$\Delta\hat{\chi}_m = \left(G^T(\hat{\chi}_m, p_{sat})R^{-1}G(\hat{\chi}_m, p_{sat})\right)^{-1} \\ \times G^T(\hat{\chi}_m, p_{sat})R^{-1}\left(z - h(\hat{\chi}_m, p_{sat})\right) \quad \dots(27)$$

$$\hat{\chi}_{m+1} = \Delta\hat{\chi}_m + \hat{\chi}_m \quad \dots(28)$$

Here, Az is an abbreviation of Azimuth and represents an azimuth angle, and El is an abbreviation of Elevation and represents an elevation angle. The matrix R on the right side of Expression (27) is an error covariance matrix of DOA.

$$R = \begin{bmatrix} \sigma_{Az} & 0 \\ 0 & \sigma_{El} \end{bmatrix}$$
$\sigma_{Az}$ : standard deviation of Azimuth angle $\quad \dots(29)$
$\sigma_{El}$ : standard deviation of Elevation angle

Further, the function h on the right side of the Expression (27) is a vector including the Az measured angle value and the El measured angle value. Furthermore, the vector z on the right side of Expression (27) is an observation vector including the Az measured angle value and the El measured angle value to which the additive noise n is applied. That is, the following term on the right side of Expression (27) calculates the noise n.

$$z - h(\hat{\chi}_m, p_{sat}) = \mathbf{n} \quad \dots(30)$$

The DOA positioning processing unit 7 may use a convergence end determination condition described below to determine whether the iterative calculation result has converged to a value to be properly obtained.

$$\frac{\|\Delta\hat{\chi}_m\|}{\|\hat{\chi}_m\|} < \varepsilon \text{ and } m < Itrmax \quad \dots(31)$$

Here, $\varepsilon$ is a threshold for residual, m is the number of iterative calculations, and Itrmax is the maximum number of iterative calculations. When m exceeds Itrmax, the DOA positioning processing unit 7 may forcibly terminate the iterative calculation assuming that the iterative calculation has not converged to the solution.

The expression of partial differentiation expressed in Expression (25) can be modified as follows.

$$G(\chi, p_{sat}) = F(p, p_{sat})E^T(\chi_t) \quad \dots(32)$$

Here, F and E on the right side of Expression (32) are as follows.

$$F(p, p_{sat}) = \begin{pmatrix} \nabla_p Az & \nabla_p El \end{pmatrix}^T \quad \dots(33)$$

$$E(\chi) = \left( \left( \frac{p}{\partial Lon} \right) \quad \left( \frac{p}{\partial Lat} \right) \right)^{T} \quad \dots (34)$$

The ambiguity handling unit 8 selects, from among a plurality of positioning points calculated by the TDOA positioning processing unit 5, a positioning point closest to the positioning point X calculated by the DOA positioning processing unit 7, and outputs a positioning result with the selected value as a most likely positioning point p.

$$p = \arg\min_{p_k} \|p_k - \chi\| \quad \dots (35)$$

Here, the subscript k is used to distinguish the ambiguity of the TDOA. If the total number of ambiguities of the TDOA is K, k is used from 1 to K. In addition, the symbol // * // represents a norm here. The norm here has no problem as Euclidean norm.

Since the positioning device according to the first embodiment has the above configuration, the ambiguity handling unit 8 selects the positioning point closest to the positioning point X calculated by the DOA positioning processing unit 7 from among the plurality of positioning points calculated by the TDOA positioning processing unit 5, and outputs a positioning result with the selected value as the most likely positioning point p. With this operation, the positioning device according to the present disclosure technology has an effect of positioning the positioning target with high accuracy even when a pulse radar wave is used as a transmission wave of the positioning target.

Second Embodiment not according to the invention

In the first embodiment, as one aspect of the present disclosure technology, a DOA is estimated by one satellite. A second embodiment illustrates that a DOA is estimated by a plurality of satellites as another aspect of the present disclosure technology. In the second embodiment, the same reference numerals as those of the components used in the first embodiment are used unless otherwise specified. In the second embodiment, the description overlapping with the first embodiment is appropriately omitted.

A part of a positioning device according to the second embodiment can be implemented by a program executed on the processor 100. The hardware configuration in this case is as illustrated in FIG. 2. The positioning device according to the second embodiment estimates the DOA, not just for information coming from one satellite as described in the first embodiment, but for each information coming from different satellites. The positioning device according to the second embodiment may calculate the centroid of the obtained plurality of positioning points, and use the calculated centroid value to replace the DOA estimation value by one satellite illustrated in the first embodiment.

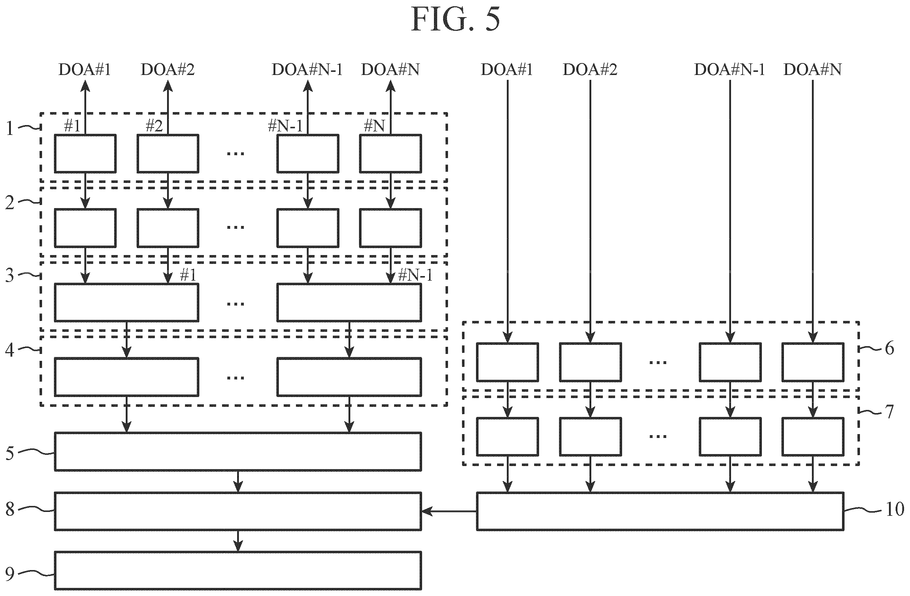

FIG. 5 is a functional block diagram illustrating a configuration of the positioning device according to the second embodiment. As illustrated in FIG. 5, the positioning device according to the second embodiment includes a functional block of a centroid value calculating unit 10 in addition to the functional blocks described in the first embodiment. Furthermore, as illustrated in FIG. 5, in the positioning device according to the second embodiment, assuming that the number of satellites, that is, the number of receiving antennas is N, the DOA estimation processing unit 6 performs N independent processes corresponding to the respective receiving antennas. As does the DOA estimation processing unit 6, the DOA positioning processing unit 7 also performs N pieces of independent processing corresponding to the respective receiving antennas.

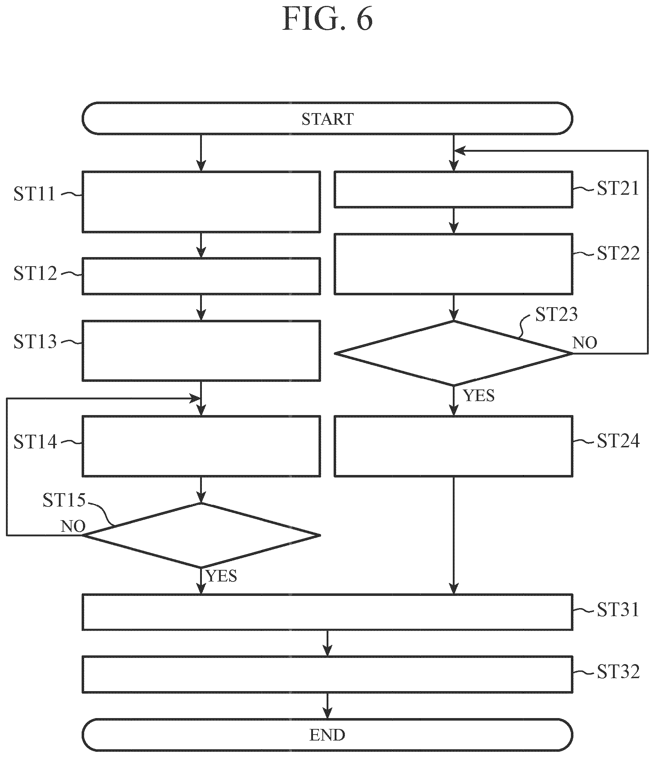

FIG. 6 is a flowchart illustrating a processing flow of the positioning device according to the second embodiment. As illustrated in FIG. 6, the positioning device according to the second embodiment includes, in addition to the processing steps described in the first embodiment, a step (ST23) of confirming whether DOA estimation has been completed for all the satellites in the processing step related to DOA, and a step (ST24) of calculating the centroid of the positioning point calculated for each of the plurality of DOAs.

The step (ST24) of calculating the centroid of the positioning point calculated for each of the plurality of DOAs is executed by the centroid value calculating unit 10, and specifically, the following calculation is performed.

$$C = \frac{1}{N} \sum_{n=1}^{N} \chi_n \quad \dots (36)$$

Here, C is a centroid to be obtained, and N is the number of satellites as described above.

The ambiguity handling unit 8 according to the second embodiment selects, from among the plurality of positioning points calculated by the TDOA positioning processing unit 5, a positioning point closest to the centroid C of the positioning point calculated by the centroid value calculating unit 10, and outputs a positioning result with the selected value as the most likely positioning point p.

$$p = \arg\min_{\boldsymbol{p}_k} \|\boldsymbol{p}_k - \boldsymbol{C}\| \quad \ldots (37)$$

Here, the subscript k is used to distinguish the ambiguity of the TDOA. If the total number of ambiguities of the TDOA is K, k is used from 1 to K. In addition, the symbol // * // represents a norm here. The norm here has no problem as Euclidean norm.

Since the positioning device according to the second embodiment has the above configuration, the ambiguity handling unit 8 selects, from among the plurality of positioning points calculated by the TDOA positioning processing unit 5, **a** positioning point closest to the centroid C of the positioning point calculated by the centroid value calculating unit 10, and outputs a positioning result with the selected value as the most likely positioning point **p.** With this operation, the positioning device according to the present disclosure technology has an effect of positioning the positioning target with high accuracy even when a pulse radar wave is used as a transmission wave of the positioning target.

Third Embodiment not according to the invention

In the first embodiment and the second embodiment, positioning is performed on the basis of TDOA as an aspect of the present disclosure technology. The present disclosure technology is not limited thereto, and positioning may be performed on the basis of FDOA. A third embodiment illustrates an aspect of a positioning device that performs positioning on the basis of FDOA. In the third embodiment, the same reference numerals as those of the components used in the above-described embodiments are used unless otherwise specified. In the third embodiment, the description overlapping with the previously described embodiments is appropriately omitted.

A part of the positioning device according to the third embodiment can be implemented by a program executed on the processor 100. The hardware configuration in this case is as illustrated in FIG. 2. The positioning device according to the third embodiment performs a process for FDOA instead of the process for TDOA performed in the first embodiment.

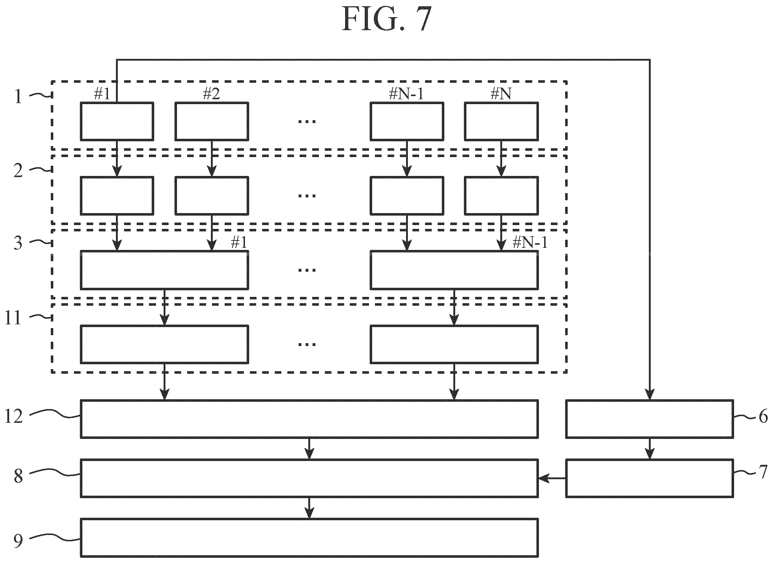

FIG. 7 is a functional block diagram illustrating a configuration of the positioning device according to the third embodiment. As illustrated in FIG. 7, the positioning device according to the third embodiment includes an FDOA calculating unit 11 and an FDOA positioning processing unit 12 instead of the TDOA calculating unit 4 and the TDOA positioning processing unit 5 of the functional blocks of the first embodiment. Both TDOA and FDOA have a plurality of peaks at the output of cross-correlation, but the ambiguity of TDOA occurs for each PRI, whereas the ambiguity of FDOA occurs for each 1/PRI.

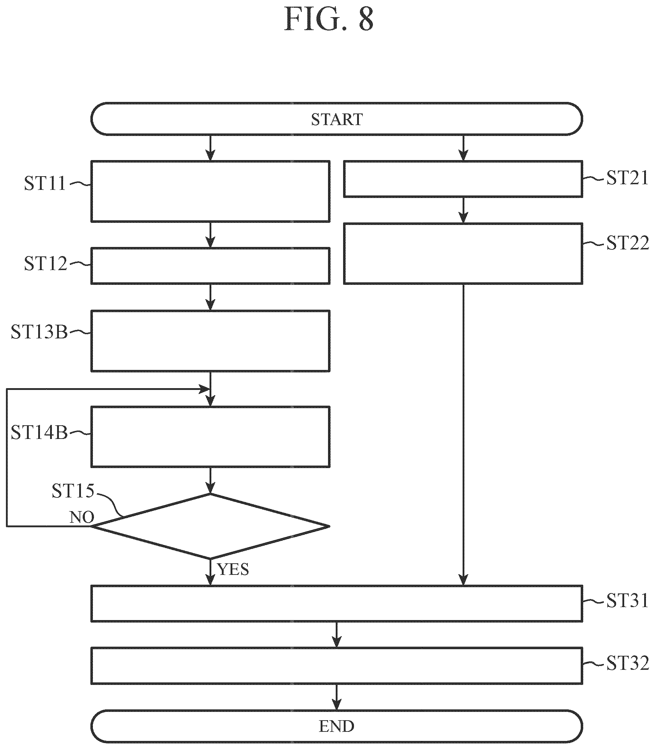

FIG. 8 is a flowchart illustrating a processing flow of the positioning device according to the third embodiment. As illustrated in FIG. 8, the positioning device according to the third embodiment executes a step (ST13B) of calculating FDOA and a step (ST14B) of performing FDOA positioning instead of the step (ST13) of calculating TDOA and the step (ST14) of performing TDOA positioning described in the first embodiment. The step (ST13B) of calculating FDOA is executed by the FDOA calculating unit 11, and the step (ST14B) of performing FDOA positioning is executed by the FDOA positioning processing unit 12.

The FDOA positioning processing unit 12 performs FDOA positioning on the basis of the calculated FDOA (step indicated by ST14B in FIG. 8). For example, in a case where the positions of the radio wave sources are measured by three satellites, the FDOA positioning processing unit 12 performs the iterative calculation expressed in the above Expression (20). However, in the case of FDOA positioning, $A_k$ and $u_k$ used for iterative calculation are as follows.

$$\boldsymbol{A}_k = \begin{bmatrix} \nabla_{\boldsymbol{p}} g_{12}{}^T \\ \nabla_{\boldsymbol{p}} g_{12}{}^T \\ \nabla_{\boldsymbol{p}} h^T \end{bmatrix} \quad \ldots (38)$$

$$\Delta \boldsymbol{u}_k = \begin{bmatrix} \lambda\, FDOA_{12_k} - g_{12} \\ \lambda\, FDOA_{23_k} - g_{23} \\ R_E - h \end{bmatrix} \quad \ldots (39)$$

However, the subscript k (k = 1, 2, ... K) is for distinguishing the ambiguity of FDOA. K is the total number of ambiguities of the FDOA.

Processing after the step (ST14B) of performing FDOA positioning is the same as that described in the first embodiment.

Since the positioning device according to the third embodiment has the above configuration, the ambiguity handling unit 8 selects the positioning point closest to the positioning point X calculated by the DOA positioning processing unit 7 from among the plurality of positioning points calculated by the FDOA positioning processing unit 12, and outputs a positioning result with the selected value as the most likely positioning point p. With this operation, the positioning device according to the present disclosure technology has an effect of positioning the positioning target with high accuracy even when a pulse radar wave is used as a transmission wave of the positioning target.

Fourth Embodiment not according to the invention

In the third embodiment, positioning is performed on the basis of the FDOA, and a DOA is estimated by one satellite. In a fourth embodiment, positioning is performed on the basis of FDOA, and DOAs are estimated by a plurality of satellites. In the fourth embodiment, the same reference numerals as those of the components used in the above-described embodiments are used unless otherwise specified. In the fourth embodiment, the description overlapping with the previously described embodiment is appropriately omitted.

A part of a positioning device according to the fourth embodiment can be implemented by a program executed on the processor 100. The hardware configuration in this case is as illustrated in FIG. **2.** The positioning device according to the fourth embodiment estimates the DOA, not just for information coming from one satellite as described in the third embodiment, but for each information coming from different satellites. The positioning device according to the fourth embodiment may calculate the centroid of the obtained plurality of positioning points, and use the calculated centroid value to replace the DOA estimation value by one satellite illustrated in the third embodiment.

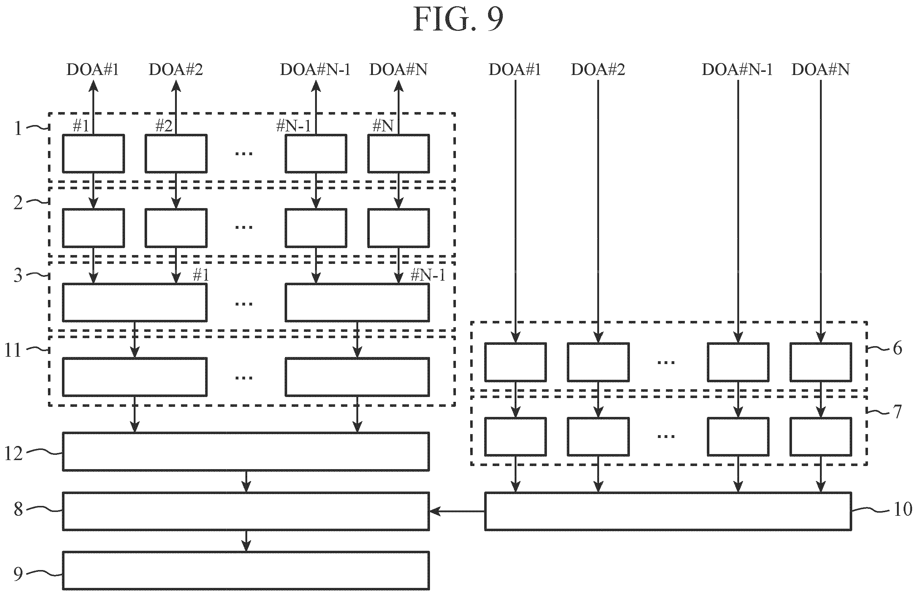

FIG. 9 is a functional block diagram illustrating a configuration of a positioning device according to a fourth embodiment. As illustrated in FIG. 9, the positioning device according to the fourth embodiment includes a functional block of a centroid value calculating unit 10 in addition to the functional blocks described in the third embodiment. Furthermore, as illustrated in FIG. 9, in the positioning device according to the fourth embodiment, assuming that the number of satellites, that is, the number of receiving antennas is N, the DOA estimation processing unit 6 performs N pieces of independent processing corresponding to the respective receiving antennas. As does the DOA estimation processing unit 6, the DOA positioning processing unit 7 also performs N pieces of independent processing corresponding to the respective receiving antennas. A configuration in which the DOA estimation processing unit 6 and the DOA positioning processing unit 7 perform N pieces of independent processing in the fourth embodiment is the same as the configuration according to the second embodiment illustrated in FIG. 5.

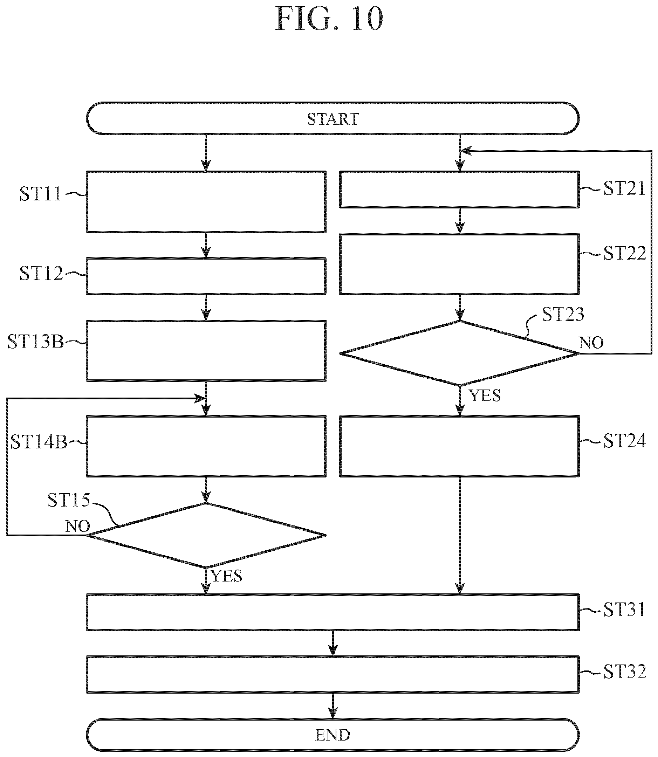

FIG. 10 is a flowchart illustrating a processing flow of the positioning device according to the fourth embodiment.

As illustrated in FIG. 10, the positioning device according to the fourth embodiment executes the step (ST13B) of calculating FDOA and the step (ST14B) of performing FDOA positioning instead of the step (ST13) of calculating TDOA and the step (ST14) of performing TDOA positioning described in the first embodiment. The step (ST13B) of calculating FDOA is executed by the FDOA calculating unit 11, and the step (ST14B) of performing FDOA positioning is executed by the FDOA positioning processing unit 12.

Furthermore, as illustrated in FIG. 10, the positioning device according to the fourth embodiment includes, in addition to the processing steps described in the third embodiment, the step (ST23) of confirming whether DOA estimation has been completed for all satellites in the processing step related to DOA, and the step (ST24) of calculating the centroid of the positioning point calculated for each of a plurality of DOAs.

The positioning device according to the fourth embodiment is a combination of the second embodiment and the third embodiment. As described above, the positioning device according to the present disclosure technology may be configured by freely combining the aspects described in each embodiment within the scope of creation of a technical idea.

As described above, the positioning device according to the fourth embodiment has the operations described in the second embodiment and the fourth embodiment, and has the effects described in the second embodiment and the third embodiment.

Fifth Embodiment not according to the invention

As described in the foregoing embodiments, the positioning method of the positioning device according to the present disclosure technology is not limited, and may be TDOA positioning or FDOA positioning. In a fifth embodiment, positioning of both TDOA and FDOA is performed.

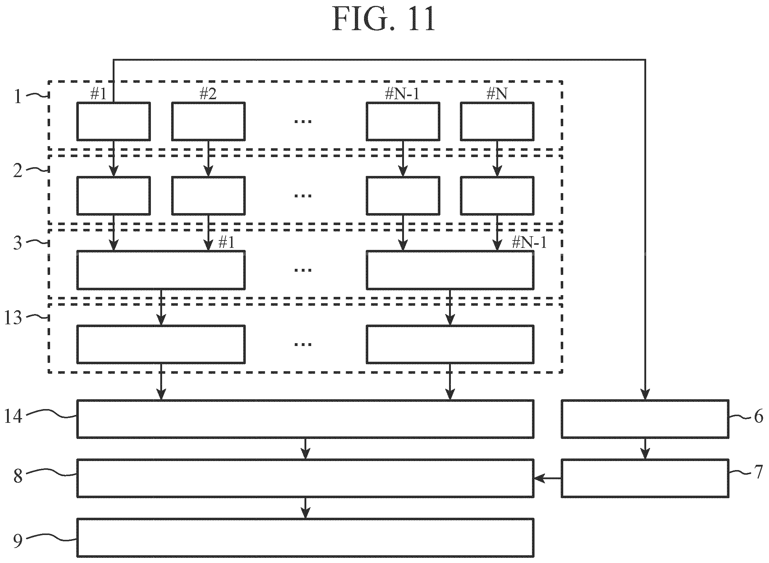

FIG. 11 is a functional block diagram illustrating a configuration of a positioning device according to the fifth embodiment. As illustrated in FIG. 11, the positioning device according to the fifth embodiment includes a TDFD calculating unit 13 and a TDFD positioning processing unit 14 instead of the TDOA calculating unit 4 and the TDOA positioning processing unit 5 of the functional blocks of the first embodiment.

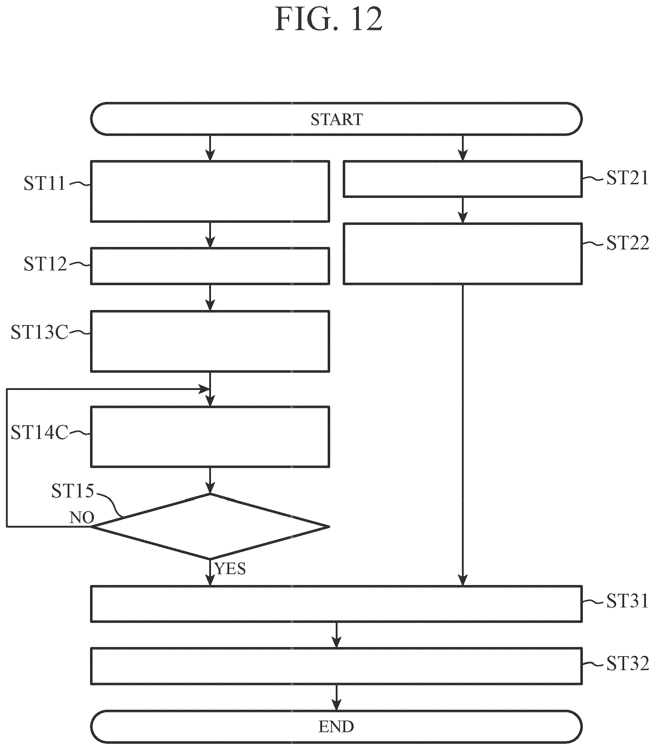

FIG. 12 is a flowchart illustrating a processing flow of the positioning device according to the fifth embodiment. As illustrated in FIG. 12, the positioning device according to the fifth embodiment executes a step (ST13C) of calculating a TDFD and a step (ST14C) of performing TDFD positioning instead of the step (ST13) of calculating TDOA and the step (ST14) of performing TDOA positioning described in the first embodiment. The step (ST13C) of calculating the TDFD is executed by the TDFD calculating unit 13, and the step (ST14C) of performing TDFD positioning is executed by the TDFD positioning processing unit 14.

The TDFD positioning processing unit 14 performs TDFD positioning on the basis of the calculated TDFD (step indicated by ST14C in FIG. 10). For example, in a case where the positions of the radio wave sources are measured by three satellites, the TDFD positioning processing unit 14 performs the iterative calculation expressed in the above Expression (20). However, in a case of the TDFD positioning, $A_k$ and $u_k$ used in the iterative calculation are vectors of an enlarged system in which dimensions are enlarged as follows.

$$A_k = \begin{bmatrix} \nabla_{\boldsymbol{p}} f_{12}^{T} \\ \nabla_{\boldsymbol{p}} f_{23}^{T} \\ \nabla_{\boldsymbol{p}} g_{12}^{T} \\ \nabla_{\boldsymbol{p}} g_{23}^{T} \\ \nabla_{\boldsymbol{p}} h^{T} \end{bmatrix} \quad \dots (40)$$

$$\Delta\boldsymbol{u}_k = \begin{bmatrix} c\,TDOA_{12_k} - f_{12} \\ c\,TDOA_{23_k} - f_{23} \\ \lambda\,FDOA_{12_k} - g_{12} \\ \lambda\,FDOA_{23_k} - g_{23} \\ R_E - h \end{bmatrix} \quad \dots (41)$$

Here, the subscript k (k = 1, 2, ... K) is used to distinguish the ambiguity. K is the total number of ambiguities.

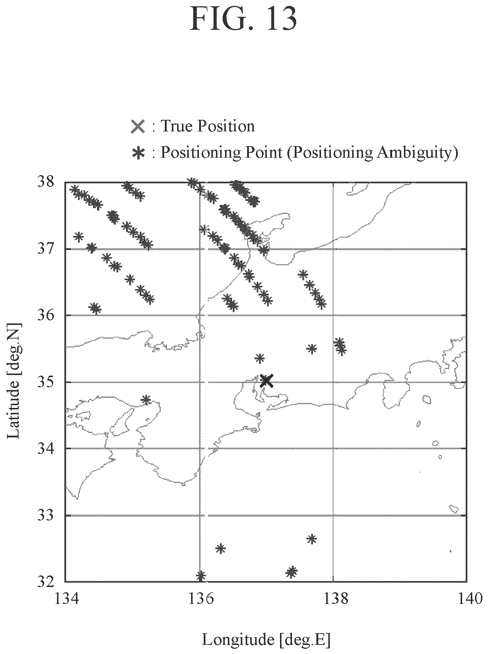

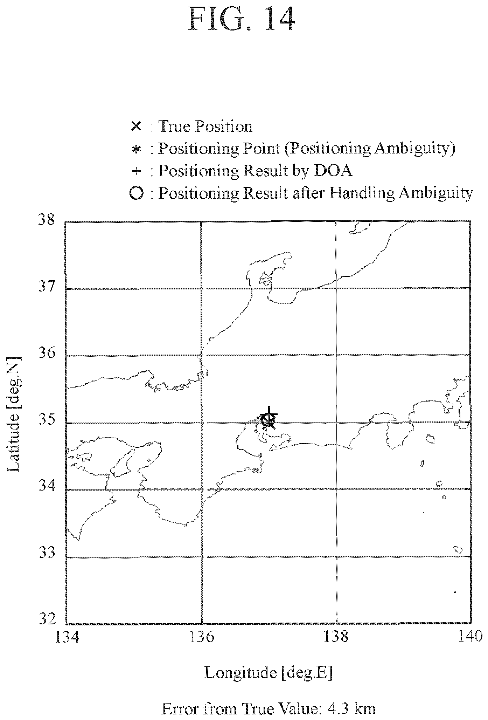

The effect of the positioning device according to the fifth embodiment becomes clear from FIGS. 13 and 14. FIG. 13 is a schematic diagram Part 1 illustrating an effect of the positioning device according to the fifth embodiment. Further, FIG. 14 is a schematic diagram Part 2 illustrating an effect of the positioning device according to the fifth embodiment. More specifically, FIG. 13 illustrates data handled by the positioning device according to the fifth embodiment on a map, and indicates that the positioning result has ambiguity. More specifically, FIG. 14 illustrates positioning points estimated by the positioning device according to the fifth embodiment on a map. In the estimation result illustrated in FIG. 14, the positioning error is equal to or less than 4.3 [km].

Since the positioning device according to the fifth embodiment has the above configuration, the ambiguity handling unit 8 selects the positioning point closest to the positioning point X calculated by the DOA positioning processing unit 7 among the plurality of positioning points calculated by the TDFD positioning processing unit 14, and outputs a positioning result with the selected value as the most likely positioning point p. With this operation, the positioning device according to the present disclosure technology has an effect of positioning the positioning target with high accuracy even when a pulse radar wave is used as a transmission wave of the positioning target.

The aspect of the fifth embodiment described above has been described as one aspect of the present disclosure technology in which a DOA is estimated by one satellite. However, the present disclosure technology is not limited thereto. The positioning device according to the present disclosure technology may be a positioning device in which a plurality of satellites estimate a DOA by combining the above aspects with the second embodiment.

Sixth Embodiment

The positioning device according to the present disclosure technology may be devised to obtain the range of TDFD in advance when calculating the TDFD from the peak of the two-dimensional correlation calculation. A sixth embodiment illustrates a mode in which a functional block of a TDOA range calculating unit 15 is further included in addition to the functional blocks of the positioning device according to the first embodiment.

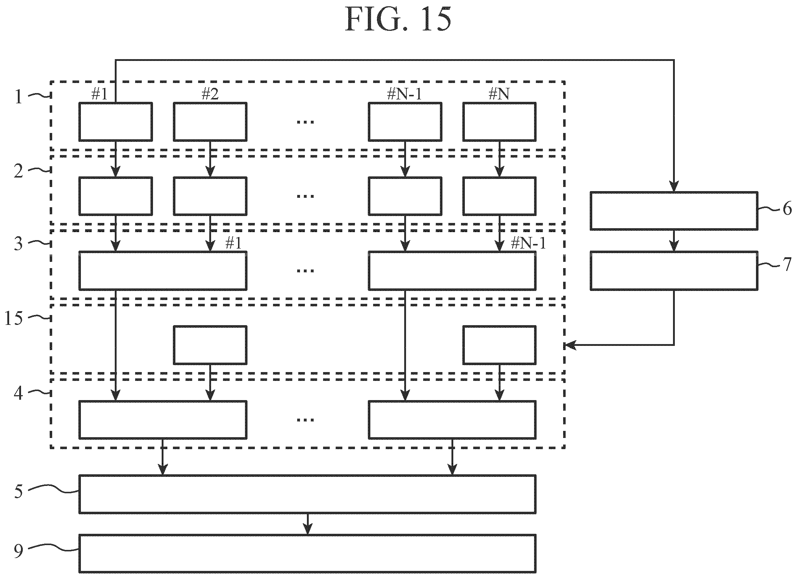

FIG. 15 is a functional block diagram illustrating a configuration of a positioning device according to the sixth embodiment. As illustrated in FIG. 15, the positioning device according to the sixth embodiment includes a functional block of the TDOA range calculating unit 15 in addition to the functional blocks described in the first embodiment. As illustrated in FIG. 15, the number of TDOA range calculating units 15 may be equal to the number of TDOA calculating units 4. The TDOA range calculating unit 15 may be implemented as a program executed on the processor 100 illustrated in FIG. 2, or may be implemented by dedicated hardware.

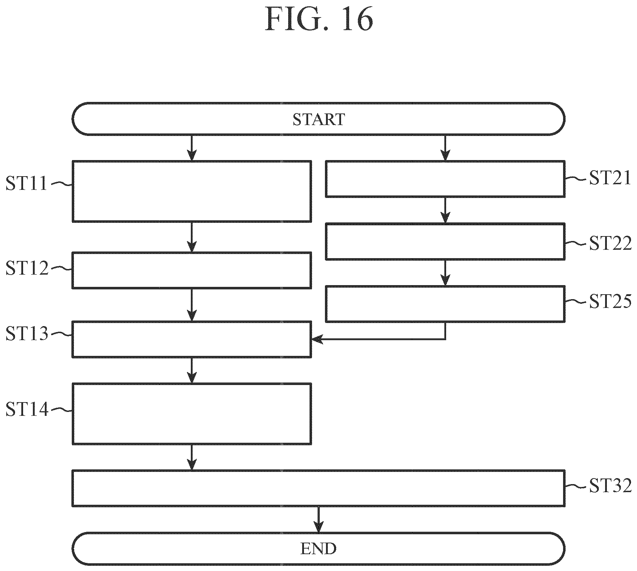

FIG. 16 is a flowchart illustrating a processing flow of the positioning device according to the sixth embodiment. As illustrated in FIG. 16, the positioning device according to the sixth embodiment further includes a step (ST25) of calculating a range of TDOA in the processing step related to DOA, in addition to the processing steps described in the first embodiment. The step (ST25) of calculating the range of TDOA is performed by the TDOA range calculating unit 15.

ST25 performed by the TDOA range calculating unit 15 becomes apparent from the following description on the basis of mathematical expressions. First, it is a well-known fact that a coordinate system represented by LON and LAT can be converted into an XYZ coordinate system at any time. Thus, the TDOA range calculating unit 15 converts the measured position value in the latitude-longitude display calculated from the DOA into a three-dimensional position vector that is an XYZ coordinate system. The converted three-dimensional position vector is $P_\chi$.

In an example in which the position of the radio wave source is measured using three satellites, the TDOA difference between satellite #1 and satellite #2 is obtained from Expression (1), and the TDOA difference between satellite #2 and satellite #3 is obtained from Expression (3) as follows.

$$TDOA_{12_\chi} = \frac{1}{c}\|\boldsymbol{p}_\chi - \boldsymbol{p}_{s1}\| - \frac{1}{c}\|\boldsymbol{p}_\chi - \boldsymbol{p}_{s2}\| \ \dots (42)$$

$$TDOA_{23_\chi} = \frac{1}{c}\|\boldsymbol{p}_\chi - \boldsymbol{p}_{s2}\| - \frac{1}{c}\|\boldsymbol{p}_\chi - \boldsymbol{p}_{s3}\| \ \dots (43)$$

Here, Expression (42) and Expression (43) use the fact that three-dimensional position vectors for three satellites, that is, $P_{s1}$, $P_{s2}$, and $P_{s3}$ are known.

The TDOA range calculating unit 15 sets the range of TDOA, that is, the upper limit and the lower limit of TDOA as follows, using the values obtained by Expression (42) and Expression (43) as reference values.

$$TDOA_{12_\chi} - \delta_{TDOA} \le TDOA_{12} \le TDOA_{12_\chi} + \delta_{TDOA} \ \dots (44)$$

$$TDOA_{23_\chi} - \delta_{TDOA} \le TDOA_{23} \le TDOA_{23_\chi} + \delta_{TDOA} \ \dots (45)$$

Here, $2\delta_{TDOA}$ is the width of the TDOA (hereinafter, referred to as a "TDOA-width"). The TDOA-width is set to be equal to or less than the PRI of the pulse radar wave of the transmission source as the positioning target.

Setting the TDOA-width to be equal to or less than the PRI of the pulse radar wave of the transmission source has an effect of narrowing the set of the expression (20), the expression (21), and the expression (22) of the iterative calculation necessary for the number of ambiguities into one set. Specifically, a set of expressions of the iterative calculation performed by the TDOA calculating unit 4 according to the sixth embodiment is as follows.

$$\boldsymbol{p} = \boldsymbol{p} + \boldsymbol{A}^{-1}\Delta\boldsymbol{u} \ \dots (46)$$

Here, A and $\Delta$u are given by the following mathematical expressions.

$$\boldsymbol{A} = \begin{bmatrix} \nabla_{\boldsymbol{p}} f_{12}{}^T \\ \nabla_{\boldsymbol{p}} f_{23}{}^T \\ \nabla_{\boldsymbol{p}} h^T \end{bmatrix} \ \dots (47)$$

$$\Delta\boldsymbol{u} = \begin{bmatrix} c\,TDOA_{12} - f_{12} \\ c\,TDOA_{23} - f_{23} \\ R_E - h \end{bmatrix} \ \dots (48)$$

As described above, since the positioning device according to the sixth embodiment has the above configuration, in addition to the effect described in the first embodiment, there is an effect that the number of sets of iterative calculations required as many as the number of ambiguities can be narrowed down to one set.

The aspect of the sixth embodiment described above has been described as one aspect of the present disclosure technology in which a DOA is estimated by one satellite. However, the present disclosure technology is not limited thereto. The positioning device according to the present disclosure technology may be a positioning device in which a plurality of satellites estimate a DOA by combining the above aspects with the second embodiment. That is, the range of TDOA calculated by the TDOA range calculating unit 15 may be determined with the centroid of DOA estimated by a plurality of satellites, and a reference value of the range may be determined.

Seventh Embodiment not according to the invention

The positioning device according to the present disclosure technology may be devised to obtain the range of TDFD in advance when calculating the TDFD from the peak of the two-dimensional correlation calculation. A seventh embodiment illustrates a mode in which a functional block of the FDOA range calculating unit 16 is further included in addition to the functional blocks of the positioning device according to the third embodiment.

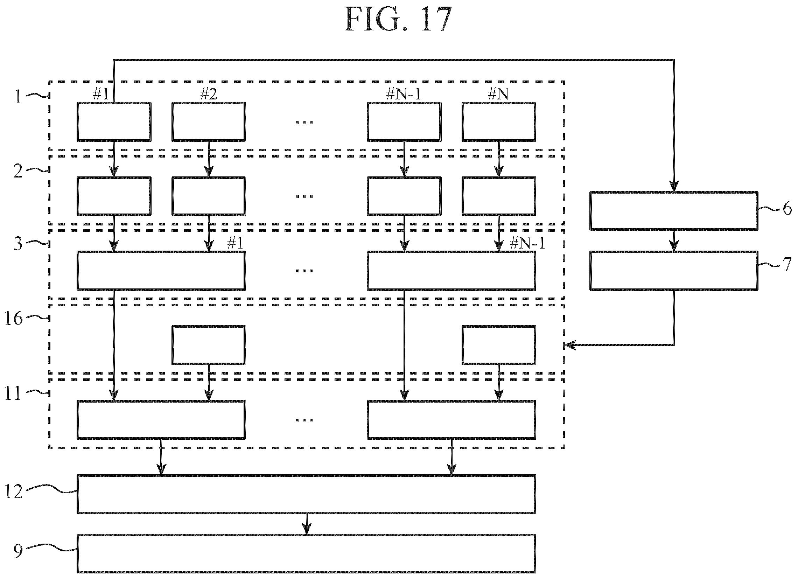

FIG. 17 is a functional block diagram illustrating a configuration of a positioning device according to the seventh embodiment. As illustrated in FIG. 17, the positioning device according to the seventh embodiment includes functional blocks of the FDOA range calculating unit 16 in addition to the functional blocks illustrated in the third embodiment.

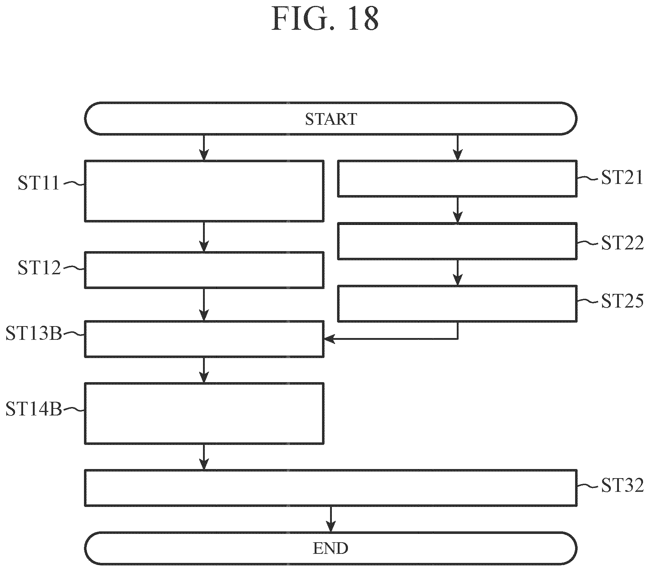

FIG. 18 is a flowchart illustrating a processing flow of the positioning device according to the seventh embodiment. As illustrated in FIG. 18, the positioning device according to the seventh embodiment further includes a step (ST25B) of calculating a range of FDOA in the processing step related to DOA, in addition to the processing steps described in the third embodiment. The step (ST25B) of calculating the FDOA range is performed by the FDOA range calculating unit 16.

In an example in which the position of the radio wave source is measured using three satellites, the FDOA difference between satellite #1 and satellite #2 is obtained from Expression (2), and the FDOA difference between satellite #2 and satellite #3 is obtained from Expression (4) as follows.

$$FDOA_{12\chi} = \frac{1}{\lambda}\frac{v_{s1}^T(\boldsymbol{p}_\chi - \boldsymbol{p}_{s1})}{\|\boldsymbol{p}_\chi - \boldsymbol{p}_{s1}\|} - \frac{1}{\lambda}\frac{v_{s2}^T(\boldsymbol{p}_\chi - \boldsymbol{p}_{s2})}{\|\boldsymbol{p}_\chi - \boldsymbol{p}_{s2}\|} \quad \ldots(49)$$

$$FDOA_{23\chi} = \frac{1}{\lambda}\frac{v_{s2}^T(\boldsymbol{p}_\chi - \boldsymbol{p}_{s2})}{\|\boldsymbol{p}_\chi - \boldsymbol{p}_{s2}\|} - \frac{1}{\lambda}\frac{v_{s3}^T(\boldsymbol{p}_\chi - \boldsymbol{p}_{s3})}{\|\boldsymbol{p}_\chi - \boldsymbol{p}_{s3}\|} \quad \ldots(50)$$

The FDOA range calculating unit 16 may set the range of FDOA, that is, the upper limit and the lower limit of FDOA as follows, using the values obtained by the Expressions (49) and (50) as reference values.

$$FDOA_{12\chi} - \delta_{FDOA} \le FDOA_{12} \le FDOA_{12\chi} + \delta_{FDOA} \quad \ldots(51)$$

$$FDOA_{23\chi} - \delta_{FDOA} \le FDOA_{23} \le FDOA_{23\chi} + \delta_{FDOA} \quad \ldots(52)$$

Here, $2\delta_{FDOA}$ is the width of FDOA (hereinafter referred to as "FDOA-width"). The FDOA-width may be set to be equal to or less than a reciprocal of the PRI of the pulse radar wave of the transmission source as the positioning target, that is, 1/PRI.

Setting the FDOA-width to be equal to or less than 1/PRI of the transmission source has an effect of narrowing the set of the expression (20), the expression (38), and the expression (39) of the iterative calculation required for the number of ambiguities to one set. Specifically, the expression of the iterative calculation performed by the FDOA calculating unit 11 according to the seventh embodiment is the same as the expression (46). However, A and Δu are given by the following mathematical expressions.

$$A = \begin{bmatrix} \nabla_p g_{12}{}^T \\ \nabla_p g_{12}{}^T \\ \nabla_p h^T \end{bmatrix} \quad \ldots (53)$$

$$\Delta u = \begin{bmatrix} \lambda\, FDOA_{12} - g_{12} \\ \lambda\, FDOA_{23} - g_{23} \\ R_E - h \end{bmatrix} \quad \ldots (54)$$

As described above, since the positioning device according to the seventh embodiment has the above configuration, in addition to the effects described in the third embodiment, there is an effect that the number of sets of iterative calculations required as many as the number of ambiguities can be narrowed down to one set.

The aspect of the seventh embodiment described above has been described as one aspect of the present disclosure technology in which a DOA is estimated by one satellite. However, the present disclosure technology is not limited thereto. The positioning device according to the present disclosure technology may be a positioning device in which a plurality of satellites estimate a DOA by combining the above aspects with the fourth embodiment. That is, the range of FDOA calculated by the FDOA range calculating unit 16 may be determined on the basis of the centroid of DOA estimated by a plurality of satellites, and a reference value of the range may be determined.

Another embodiment of the positioning device according to the present disclosure technology may be implemented by combining the sixth embodiment and the seventh embodiment. That is, the TDFD range calculating unit 17 may calculate the range of TDFD with respect to the mode described in the fifth embodiment in which both the TDOA and the FDOA are positioned. Also in this case, the DOA may be estimated by one satellite or by a plurality of satellites.

Eighth Embodiment not according to the invention

In obtaining TDOA and FDOA, the positioning device according to the present disclosure technology may be devised to select a most likely TDOA measurement value and FDOA measurement value by obtaining an "presence expected area" in which a true value is expected to be present in a space including a dimension of TDOA and a dimension of FDOA (hereinafter referred to as "TDOA-FDOA space"). A positioning device according to an eighth embodiment calculates a "presence expected area" and obtains the most likely TDOA measurement value and FDOA measurement value.

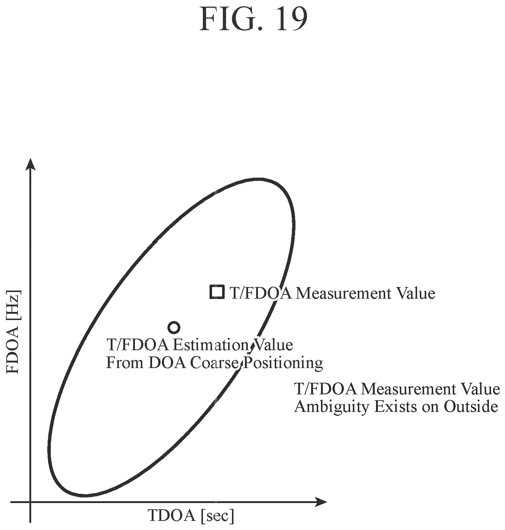

FIG. 19 is a conceptual diagram illustrating a "presence expected area" in the TDOA-FDOA space. In the TDOA-FDOA space illustrated in FIG. 19, the "presence expected area" is indicated by an ellipse.

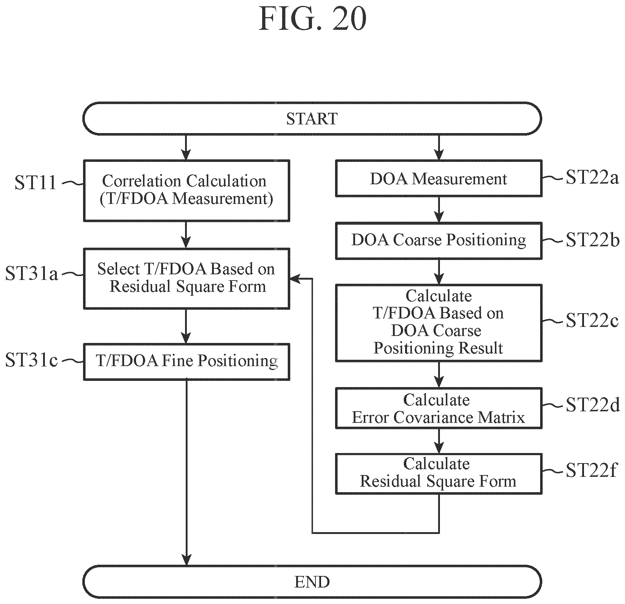

FIG. 20 is a flowchart illustrating a processing flow of the positioning device according to the eighth embodiment. As illustrated in FIG. 20, the processing of the positioning device according to the eighth embodiment is also roughly divided into three parts. A first part is a processing step related to TDFD (In FIG. 20 and the like, TDFD is displayed as "T/FDOA"). The processing steps related to TDFD include calculating cross-correlation (ST11). The second part is a processing step related to DOA. The processing steps related to DOA include a processing step (ST22a) of performing DOA measurement, a processing step (ST22b) of performing DOA coarse positioning, a processing step (ST22c) of calculating a TDFD based on a DOA coarse positioning result, a step (ST22d) of calculating an error covariance matrix, and a step (ST22f) of calculating a residual square form. The third part is a processing step utilizing the TDOA result and the DOA result. The processing steps here include a step (ST31a) of selecting a TDFD based on the residual square form and a step (ST31c) of performing TDFD fine positioning.

The positioning device according to the eighth embodiment performs processing on the basis of an idea that an observation value ($z_{TDFD}$) of the TDFD is represented by the following mathematical model (also referred to as a measurement model).

$$z_{TDFD} = h_{TDFD}(p_t, \; p_{sat2}, \; v_{sat2}) + n_{TDFD} \qquad \ldots \quad (55)$$

However, a true value ($h_{TDFD}$) of the desired TDFD is expressed by the following expression. Note that, hereinafter, for the sake of simplicity, the mathematical expressions are on the basis of satellite #1 and satellite #2, but the mathematical expressions can be generalized and applied even when the number of satellites increases.

$$h_{\text{TDFD}}(\boldsymbol{p}_t, \quad \boldsymbol{p}_{\text{sat2}}, \quad \boldsymbol{v}_{sat2}) \quad = \quad \begin{bmatrix} TDOA_{12}(\boldsymbol{p}_t, \quad \boldsymbol{p}_{\text{sat2}}) \\ FDOA_{12}(\boldsymbol{p}_t, \quad \boldsymbol{p}_{\text{sat2}}, \quad \boldsymbol{v}_{sat2}) \end{bmatrix} \qquad \text{. . .} \quad (56)$$

Here, $p_t$ is a three-dimensional position vector of an interference station. The interference station is a wireless station in which an ambiguity occurs in the position and the velocity due to radio interference. More specifically, the component of the vector $h_{\text{TDFD}}$ is derived as follows from Expressions (1) and (2).

$$TDOA_{12}(\boldsymbol{p}_t, \quad \boldsymbol{p}_{\text{sat2}}) \quad = \quad \frac{1}{c}\|\boldsymbol{p}_t - \boldsymbol{p}_{s1}\| - \frac{1}{c}\|\boldsymbol{p}_t - \boldsymbol{p}_{s2}\| \qquad \text{. . .} \quad (57)$$

$$FDOA_{12}(\boldsymbol{p}_t, \quad \boldsymbol{p}_{\text{sat2}}, \quad \boldsymbol{v}_{sat2}) \quad = \quad \frac{1}{\lambda}\frac{v_{s1}^T(\boldsymbol{p}_t - \boldsymbol{p}_{s1})}{\|\boldsymbol{p}_t - \boldsymbol{p}_{s1}\|} - \frac{1}{\lambda}\frac{v_{s2}^T(\boldsymbol{p}_t - \boldsymbol{p}_{s2})}{\|\boldsymbol{p}_t - \boldsymbol{p}_{s2}\|} \qquad \text{. . .} \quad (58)$$

In addition, a vector $n_{\text{TDFD}}$ of Expression (55) is a measurement error vector representing observation noise or a measurement error. The measurement error vector ($n_{\text{TDFD}}$) can be assumed to have a property expressed by the following mathematical expression.

$$E\{\boldsymbol{n}_{\text{TDFD}}\boldsymbol{n}_{\text{TDFD}}^T\} \quad = \quad \text{diag}\{\sigma_{\text{TDOA}}{}^2, \quad \sigma_{\text{FDOA}}{}^2\}$$
$$=: \quad \boldsymbol{R}_{\text{TDFD}} \qquad \text{. . .} \quad (59)$$

$$E\{\boldsymbol{n}_{\text{TDFD}}\} \quad = \quad \boldsymbol{0} \qquad \text{. . .} \quad (60)$$

Here, E{} is a function representing an expected value. In Expression (59), $\sigma_{\text{TDOA}}{}^2$ represents the variance of the measured TDOA, and $\sigma_{\text{FDOA}}{}^2$ represents the variance of the measured FDOA. R in bold font in Expression (59) is an error covariance matrix. In addition, 0 (zero) in bold font on the right side of Expression (60) is a zero vector in which all elements are 0 (zero). Expression (60) indicates that each element of the measurement error vector ($n_{\text{TDFD}}$) has a statistical average of 0 (zero).

In Expressions (55) to (58), $P_{\text{sat2}}$ used as an argument of a function collectively represents position vectors $p_{si}$ (i = 1, 2, ...) of all satellites. Similarly, $v_{\text{sat2}}$ collectively represents the velocity vectors $v_{si}$ (i = 1, 2, ...) of all the satellites. It is assumed that $P_{\text{sat2}}$ and $v_{\text{sat2}}$ are expressed by mathematical symbols representing the following set.

$$\boldsymbol{p}_{\text{sat2}} \quad = \quad \{\boldsymbol{p}_{s1}, \quad \boldsymbol{p}_{s2}, \quad \cdots, \quad \boldsymbol{p}_{sn}\} \qquad \text{. . .} \quad (61)$$

$$\boldsymbol{v}_{\text{sat2}} \quad = \quad \{\boldsymbol{v}_{s1}, \quad \boldsymbol{v}_{s2}, \quad \cdots, \quad \boldsymbol{v}_{sn}\} \qquad \text{. . .} \quad (62)$$

Note that sat in the subscript sat2 in Expressions (61) and (62) is the first three characters in an English word "satellite" meaning a satellite.

The interference station ($p_t$) is bound by the constraint condition that the interference station ($p_t$) is on the ground surface as are the radio wave sources that are other positioning targets.

$$\|\boldsymbol{p}_t\| \quad = \quad R_E \qquad \text{. . .} \quad (63)$$

Here, $R_E$ represents the radius of the earth as in Expression (5).

It can be said that the above expressions (55) to (63) represent the interference station ($p_t$) in an Earth Centered Earth Fixed coordinate system (ECEF coordinate system), that is, the coordinate system fixed to the earth with the center of the earth as the origin.

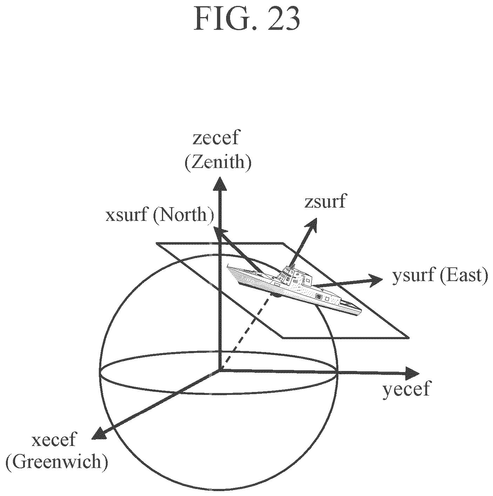

FIG. 23 is a schematic diagram illustrating the ECEF coordinate system.

Considering that a point represented in the ECEF coordinate system is a point on the surface of the Earth, it can also be represented in a polar coordinate system (also referred to as a POLAR coordinate system). That is, any point on the surface of the earth can be expressed by a polar coordinate system in which the radius ($R_E$) of the earth is known and the latitude and longitude are elements. The interference station ($p_t$) can also be expressed as in Expression (23).

$$\chi_t \ = \ (\text{Lon}_t, \ \text{Lat}_t)^T \qquad \ldots \quad (64)$$

Here, $\text{Lon}_t$ represents the longitude of the interference station, and $\text{Lat}_t$ represents the latitude of the interference station.

The positioning device according to the eighth embodiment considers a minimization problem expressed by the following mathematical expression.

$$\text{find } \chi_t \text{ s.t.} \quad \arg\min_{\chi_t} J_{\text{TDFD}}(\chi_t) \qquad \ldots \quad (65)$$

Here, the $J_{\text{TDFD}}$ of the evaluation function to be minimized is expressed by the following expression.

$$J_{\text{TDFD}}(\chi_t) \ := \ \left(z_{\text{TDFD}} - h_{\text{TDFD}}(p_t)\right)^T R_{\text{TDFD}}^{-1}\left(z_{\text{TDFD}} - h_{\text{TDFD}}(p_t)\right) \qquad \ldots \quad (66)$$

Expression (66) can be said to be a problem of the weighted least squares method. The inverse matrix of the error covariance matrix $R_{\text{TDFD}}$ on the right side of Expression (66) can be interpreted as a weight for equally handling TDOA and FDOA having different physical dimensions. A pseudo-inverse matrix method for solving a least squares problem can be applied to Expression (66).

The DOA positioning processing unit 7 of the positioning device according to the eighth embodiment performs processing on the basis of an idea that an observation value ($Z_{\text{DOA}}$) of the DOA is represented by the following mathematical model (also referred to as a measurement model).

$$z_{\text{DOA}} \ = \ h_{\text{DOA}}(p_t, \ p_{sat2}) + n_{\text{DOA}} \qquad \ldots \quad (67)$$

However, the true value ($h_{\text{DOA}}$) of the desired DOA is expressed by the following expression.

$$h_{\text{DOA}}(p_t, \ p_{sat2}) \ = \ \begin{bmatrix} Az(p_t, \ p_{sat2}) \\ El(p_t, \ p_{sat2}) \end{bmatrix} \qquad \ldots \quad (68)$$

Furthermore, each element on the right side of Expression (68) is expressed by the following expressions.

$$Az \ = \ \tan^{-1}\left(\frac{y_{\text{doa}}}{x_{\text{doa}}}\right) \qquad \ldots \quad (69)$$

$$El \ = \ \tan^{-1}\left(\frac{z_{\text{doa}}}{\sqrt{x_{\text{doa}}^2 + y_{\text{doa}}^2}}\right) \qquad \ldots \quad (70)$$

Note that $\tan^{-1}$ means arctangent.

A vector $n_{\text{DOA}}$ in Expression (67) is a measurement error vector representing observation noise or a measurement error with respect to the DOA. The measurement error vector ($n_{\text{DOA}}$) can be assumed to have a property expressed by the following mathematical expression.

$$E\{n_{\text{DOA}}n_{\text{DOA}}^T\} \ = \ \text{diag}\{\sigma_{AZ}^2, \ \sigma_{EL}^2\}$$
$$=: \ R_{\text{DOA}} \qquad \ldots \quad (71)$$

A coordinate system including ($x_{\text{doa}}$, $y_{\text{doa}}$, $z_{\text{doa}}$) when calculating Azimuth (azimuth angle) and Elevation (elevation angle) by Expressions (69) and (70) is referred to as a "DOA coordinate system". The relative position vector of the radio wave source viewed from the satellites in the ECEF coordinate system can be expressed in the DOA coordinate system by the following primary conversion.

$$\begin{bmatrix} x_{\text{doa}} \\ y_{\text{doa}} \\ z_{\text{doa}} \end{bmatrix} =: \boldsymbol{p}_{\text{doa}}$$

$$= DC\{\boldsymbol{p}_{\text{ecef\_tgt}} - \boldsymbol{p}_{\text{ecef\_sat}}\}$$

$$= \begin{bmatrix} -\cos(Lon)\cos(Lat) & -\sin(Lon)\cos(Lat) & -\sin(Lat) \\ -\sin(Lon) & \cos(Lon) & 0 \\ -\cos(Lon)\sin(Lat) & -\sin(Lon)\sin(Lat) & \cos(Lat) \end{bmatrix}\{\boldsymbol{p}_{\text{ecef\_tgt}} - \boldsymbol{p}_{\text{ecef\_sat}}\}$$

wherein

$$D = \begin{bmatrix} 0 & 0 & -1 \\ 0 & 1 & 0 \\ 1 & 0 & 0 \end{bmatrix}$$

$$C = \overbrace{\begin{bmatrix} 0 & 0 & 1 \\ 0 & 1 & 0 \\ 1 & 0 & 0 \end{bmatrix}}^{change\ axis} \overbrace{\begin{bmatrix} \cos(Lat) & 0 & \sin(Lat) \\ 0 & 1 & 0 \\ -\sin(Lat) & 0 & \cos(Lat) \end{bmatrix}}^{y\ axis\ (-)Rotation} \overbrace{\begin{bmatrix} \cos(Lon) & \sin(Lon) & 0 \\ -\sin(Lon) & \cos(Lon) & 0 \\ 0 & 0 & 1 \end{bmatrix}}^{z\ axis\ (+)Rotation}$$

$$= \begin{bmatrix} -\cos(Lon)\sin(Lat) & -\sin(Lon)\sin(Lat) & \cos(Lat) \\ -\sin(Lon) & \cos(Lon) & 0 \\ \cos(Lon)\cos(Lat) & \sin(Lon)\cos(Lat) & \sin(Lat) \end{bmatrix}$$

$$\dots \quad (72)$$

Here, $p_{\text{ecef\_tgt}}$ is a three-dimensional position vector of the radio wave source in the ECEF coordinate system. Also, $p_{\text{ecef\_sat}}$ is a three-dimensional position vector of the satellite in the ECEF coordinate system. Expression (72) does not include a term relating to movement of the origin. It can be said that Expression (72) represents what happens when a relative position vector (which is also a direction vector) representing the relative position of the radio wave source in the ECEF coordinate system as viewed from the satellite is displayed as a component of the DOA coordinate system.

Both the D matrix and the C matrix of the transformation matrix in Expression (72) are configured by a transformation matrix that performs axis exchange and a rotation matrix that performs rotation around an axis. The size of the vector before the transformation does not change even after the transformation by the D matrix and the C matrix. Details of the C matrix will be apparent from a ninth embodiment to be described later.

The DOA positioning processing unit 7 of the positioning device according to the eighth embodiment considers the following minimization problem.

$$\text{find } \chi_t \text{ s.t. } \arg\min_{\chi_t} J_{\text{DOA}}(\chi_t) \quad \dots \quad (73)$$

Here, $J_{\text{DOA}}$ of the evaluation function to be minimized is expressed by the following expression.

$$J_{\text{DOA}}(\chi_t) := \left(\boldsymbol{z}_{\text{DOA}} - \boldsymbol{h}_{\text{DOA}}(\chi_t)\right)^T R_{\text{DOA}}^{-1}\left(\boldsymbol{z}_{\text{DOA}} - \boldsymbol{h}_{\text{DOA}}(\chi_t)\right) \quad \dots \quad (74)$$

As is Expression (66), Expression (74) can be said to be a problem of the weighted least squares method. The inverse matrix of the error covariance matrix $R_{\text{DOA}}$ on the right side of Expression (74) can be interpreted as a weight for handling Azimuth (azimuth angle) and Elevation (elevation angle) equally. The pseudo-inverse matrix method for solving a least squares problem can also be applied to Expression (74).

In the positioning device according to the eighth embodiment, the "presence expected area" in the TDOA-FDOA space is defined by the following procedure. As illustrated in FIG. 19, the center of the "presence expected area" is first determined from a result of coarse positioning by the DOA.

The next step in defining the "presence expected area" is to calculate the error covariance matrix ($P_{\text{DOA}}$) for DOA coarse positioning. Note that $p_{\text{DOA}}$ in the DOA coordinate system in Expression (72) is a vector and is represented by a lowercase p, whereas an error covariance matrix ($P_{\text{DOA}}$) of the DOA coarse positioning is a matrix and represented by an uppercase P, and the both are distinguished.

$$P_{\text{DOA}} = \left\{ H(\mathcal{X}_{t'} \quad \boldsymbol{p}_{\text{sat2}}) R_{\text{DOA}}^{-1} H^T(\mathcal{X}_{t'} \quad \boldsymbol{p}_{\text{sat2}}) \right\}^{-1} \qquad \cdots \quad (75)$$

Here, H of the matrix is expressed by the following expressions.

$$H(\mathcal{X}_{t'} \quad \boldsymbol{p}_{\text{sat2}}) = \begin{bmatrix} \nabla_{\mathcal{X}_t} Az(\mathcal{X}_{t'} \quad \boldsymbol{p}_{\text{sat2}}) \\ \nabla_{\mathcal{X}_t} El(\mathcal{X}_{t'} \quad \boldsymbol{p}_{\text{sat2}}) \end{bmatrix}$$

$$= \overbrace{[\nabla_{\boldsymbol{p}_t} Az(\boldsymbol{p}_{t'} \quad \boldsymbol{p}_{sat2}), \quad \nabla_{\boldsymbol{p}_t} El(\boldsymbol{p}_{t'} \quad \boldsymbol{p}_{sat2})]^T}^{L} \overbrace{\begin{bmatrix} \dfrac{\partial \boldsymbol{p}_t}{\partial Lon_t} \\ \dfrac{\partial \boldsymbol{p}_t}{\partial Lat_t} \end{bmatrix}}^{E^T} \quad \cdots \quad (76)$$

$\nabla$ (nabla) appearing in an element of the L matrix of Expression (76) is given as a vector having a partial differential operator as a vertex as follows.

$$\nabla_{\boldsymbol{p}_t} Az(\boldsymbol{p}_{t'} \quad \boldsymbol{p}_{sat2}) = \begin{bmatrix} \dfrac{\partial Az}{\partial x}, & \dfrac{\partial Az}{\partial y}, & \dfrac{\partial Az}{\partial z} \end{bmatrix}^T \qquad \cdots \quad (77)$$

$$\nabla_{\boldsymbol{p}_t} El(\boldsymbol{p}_{t'} \quad \boldsymbol{p}_{sat2}) = \begin{bmatrix} \dfrac{\partial El}{\partial x}, & \dfrac{\partial El}{\partial y}, & \dfrac{\partial El}{\partial z} \end{bmatrix}^T \qquad \cdots \quad (78)$$

Each element of the $E^T$ matrix in Expression (76) can be written down as follows:

$$\frac{\partial \boldsymbol{p}_t}{\partial Lon_t} = \frac{\partial}{\partial Lon_t} \begin{bmatrix} R_E \cos(Lon_t) \cos(Lat_t) \\ R_E \sin(Lon_t) \cos(Lat_t) \\ R_E \sin(Lat_t) \end{bmatrix}$$
$$= R_E \begin{bmatrix} -\sin(Lon_t) \cos(Lat_t) \\ \cos(Lon_t) \cos(Lat_t) \\ 0 \end{bmatrix} \qquad \cdots \quad (79)$$

$$\frac{\partial \boldsymbol{p}_t}{\partial Lat_t} = \frac{\partial}{\partial Lat_t} \begin{bmatrix} R_E \cos(Lon_t) \cos(Lat_t) \\ R_E \sin(Lon_t) \cos(Lat_t) \\ R_E \sin(Lat_t) \end{bmatrix}$$
$$= R_E \begin{bmatrix} -\cos(Lon_t) \sin(Lat_t) \\ -\sin(Lon_t) \sin(Lat_t) \\ \cos(Lat_t) \end{bmatrix} \qquad \cdots \quad (80)$$

The next procedure for defining the "presence expected area" is to create an error covariance matrix ($P_{\text{TDFD}}$) of the TDFD area from the error covariance matrix ($P_{\text{DOA}}$) of the DOA coarse positioning. The error covariance matrix ($P_{\text{TDFD}}$) of the TDFD area can be expressed by the following expression.

$$P_{\text{TDFD}} = R_{\text{TDFD}} + M(\mathcal{X}_{t'} \quad \boldsymbol{p}_{\text{sat2}}) P_{\text{DOA}} M^T(\mathcal{X}_{t'} \quad \boldsymbol{p}_{\text{sat2}}) \qquad \cdots \quad (81)$$

However, M of the transformation matrix in Expression (81) is expressed by the following expression.

$$M(\chi_t, \ \mathbf{p}_{sat2}) \ = \ \overbrace{[\nabla_{\mathbf{p}_t}TDOA(\mathbf{p}_t, \ \mathbf{p}_{sat2}), \ \nabla_{\mathbf{p}_t}FDOA(\mathbf{p}_t, \ \mathbf{p}_{sat2})]^T}^{N} \overbrace{\begin{bmatrix} \dfrac{\partial \mathbf{p}_t}{\partial Lon_t} \\ \dfrac{\partial \mathbf{p}_t}{\partial Lat_t} \end{bmatrix}}^{E^T} \quad \cdots \quad (82)$$

Each element of the N matrix in Expression (82) can be written down as follows.

$$\nabla_{\mathbf{p}_t}TDOA(\mathbf{p}_t, \ \mathbf{p}_{sat2}) \ = \ \frac{1}{c}\left\{ \frac{1}{\|\mathbf{p}_t - \mathbf{p}_{s1}\|}(\mathbf{p}_t - \mathbf{p}_{s1}) - \frac{1}{\|\mathbf{p}_t - \mathbf{p}_{s2}\|}(\mathbf{p}_t - \mathbf{p}_{s2}) \right\} \cdots \quad (83)$$

$$\begin{aligned} \nabla_{\mathbf{p}_t}FDOA(\mathbf{p}_t, \ \mathbf{p}_{sat2}) \ = \ & \frac{1}{\lambda}\left\{ \frac{\mathbf{v}_{s1}}{\|\mathbf{p}_t - \mathbf{p}_{s1}\|} - \frac{\mathbf{v}_{s1}^T(\mathbf{p}_t - \mathbf{p}_{s1})}{\|\mathbf{p}_t - \mathbf{p}_{s1}\|^3}(\mathbf{p}_t - \mathbf{p}_{s1}) \right\} \\ & - \frac{1}{\lambda}\left\{ \frac{\mathbf{v}_{s2}}{\|\mathbf{p}_t - \mathbf{p}_{s2}\|} - \frac{\mathbf{v}_{s2}^T(\mathbf{p}_t - \mathbf{p}_{s2})}{\|\mathbf{p}_t - \mathbf{p}_{s2}\|^3}(\mathbf{p}_t - \mathbf{p}_{s2}) \right\} \end{aligned} \quad \cdots \quad (84)$$

As described above, in the TDOA-FDOA space illustrated in FIG. 19, the "presence expected area" is indicated by an ellipse. The ellipse representing the "presence expected area" can be defined by the following inequality in quadratic form using the error covariance matrix ($P_{TDFD}$) of the TDFD area of Expression (81).

$$\left( z_{TDFD} - \begin{bmatrix} TDOA_{DOA} \\ FDOA_{DOA} \end{bmatrix} \right)^T P_{TDFD}^{-1} \left( z_{TDFD} - \begin{bmatrix} TDOA_{DOA} \\ FDOA_{DOA} \end{bmatrix} \right) \ < \ \gamma^2 \qquad \cdots \quad (85)$$

It can be said that the error covariance matrix ($P_{TDFD}$) of the TDFD area is an error covariance matrix (hereinafter referred to as an "overall error covariance matrix") related to the entire error assumed by the present disclosure technology. Here, $TDOA_{DOA}$ and $FDOA_{DOA}$ are TDOA and FDOA calculated from the result of coarse positioning by DOA, and are the center coordinates of the "presence expected area". $\gamma$ on the right side of Inequality (85) is a design parameter that determines the size of the ellipse. Among the observation values, the $z_{TDFD}$ of the observation value satisfying Inequality (85) is expected to be a correct value that is not affected by the ambiguity.

Expressions (55) to (84) described above are expressions required in the processing of the DOA positioning processing unit 7 illustrated in steps ST22a to ST22d in FIG. 20. In particular, the calculation of the error covariance matrix ($P_{TDFD}$) of the TDFD area indicated by Expression (81) is performed in step (ST22d) of calculating the error covariance matrix. Furthermore, the calculation of the left side of Inequality (85) is calculation in the residual square form performed for each observation value ($z_{TDFD}$), and is performed in the step (ST22f) of calculating the residual square form.

The ambiguity handling unit 8 according to the eighth embodiment selects a positioning point included in the "presence expected area" expressed in Inequality (85) among the plurality of positioning points calculated by the TDFD positioning processing unit 14, and outputs a positioning result with the selected value as the most likely positioning point p.

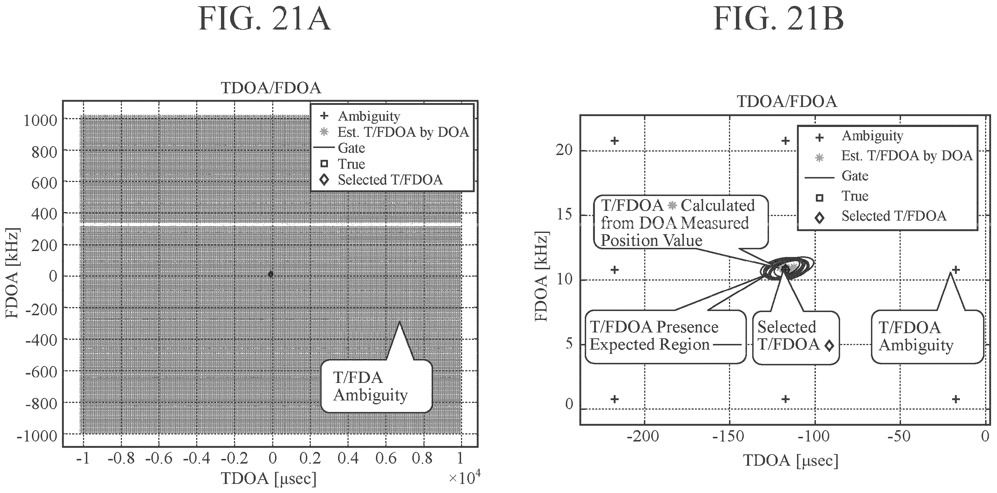

FIG. 21A is a graph plotting positioning points in a TDOA-FDOA space. FIG. 21B is a graph (enlarged version) plotting positioning points in the TDOA-FDOA space. FIGS. 21A and 21B illustrate a state in which positioning is attempted 10 times. FIGS. 21A and 21B illustrate a state in which many ambiguities are generated and a state in which the true value of positioning is included in the "presence expected area".

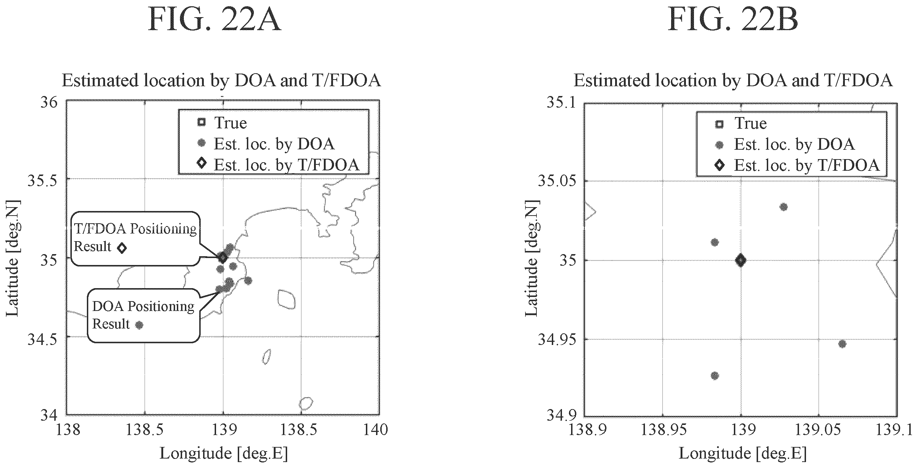

FIG. 22A is a plot on a map comparing a variation in positioning by DOA and a variation in positioning by TDFD. FIG. 22B is a plot (enlarged version) on a map comparing a variation in positioning by DOA and a variation in positioning by the TDFD. In FIG. 22, positioning by the TDFD is a result of determination that the positioning is included in the "presence expected area" expressed in Inequality (85). FIGS. 22A and 22B illustrate a state in which 10 times of trial of positioning by DOA and times of trial of positioning by TDFD are performed. As illustrated in FIG. 22, positioning of DOA is distributed more widely than positioning of TDFD. Due to this variation, the positioning of DOA is referred to as coarse positioning, and positioning of TDFD is referred to as fine positioning.

The positioning device according to the eighth embodiment employs the "presence expected area" expressed in Inequality (85) instead of Expressions (44) and (45) used by the TDOA range calculating unit 15 according to the sixth embodiment and Expressions (51) and (52) used by the FDOA range calculating unit 16 according to the seventh embodiment.

Since the positioning device according to the eighth embodiment has the above-described configuration, in addition to the effects described in the above-described embodiments, there is an effect that the "presence expected area" can be calculated systematically and the ambiguity can be eliminated.

Ninth Embodiment not according to the invention

In a case where the positioning target is a ship, the positioning device according to the present disclosure technology may be devised in consideration of a measurement error caused by movement and oscillation of the ship. A positioning device according to the ninth embodiment has a configuration capable of selecting a measured position value in consideration of a measurement error caused by movement and oscillation of the ship.

The positioning device according to the ninth embodiment introduces a "ground surface coordinate system" on the basis of the position (anchor point) of the ship present on the ground surface in order to consider the movement and oscillation of the ship. FIG. 23 is a schematic diagram illustrating an ECEF coordinate system and a ground surface coordinate system. As illustrated in FIG. 23, in the ground surface coordinate system, an axis from the ship to the north is an $x_{surf}$ axis, an axis from the ship to the east is a $y_{surf}$ axis, and an axis orthogonal to the $x_{surf}$ axis and the $y_{surf}$ axis is a $z_{surf}$ axis. However, it is assumed that the ship is neither at the North Pole nor at the South Pole where the concept of the north direction on the surface of the earth disappears. The ECEF coordinate system is a right hand system, but the ground surface coordinate system is a left hand system. Since the ground surface coordinate system is a left hand system, the ground surface coordinate system is different from an LSR coordinate system (Local Space Rectangular System).

The conversion from the ground surface coordinate system to the ECEF coordinate system is expressed by the following expressions.

$$
\begin{aligned}
x_{ecef} \;=\;& C^{-1} x_{surf} \\[2mm]
\text{wherein } C^{-1} \;=\;& \begin{bmatrix} \cos(Lon) & \sin(Lon) & 0 \\ -\sin(Lon) & \cos(Lon) & 0 \\ 0 & 0 & 1 \end{bmatrix}^{-1} \begin{bmatrix} \cos(Lat) & 0 & \sin(Lat) \\ 0 & 1 & 0 \\ -\sin(Lat) & 0 & \cos(Lat) \end{bmatrix}^{-1} \begin{bmatrix} 0 & 0 & 1 \\ 0 & 1 & 0 \\ 1 & 0 & 0 \end{bmatrix}^{-1} \\[2mm]
\;=\;& \begin{bmatrix} \cos(Lon) & \sin(Lon) & 0 \\ -\sin(Lon) & \cos(Lon) & 0 \\ 0 & 0 & 1 \end{bmatrix}^{T} \begin{bmatrix} \cos(Lat) & 0 & \sin(Lat) \\ 0 & 1 & 0 \\ -\sin(Lat) & 0 & \cos(Lat) \end{bmatrix}^{T} \begin{bmatrix} 0 & 0 & 1 \\ 0 & 1 & 0 \\ 1 & 0 & 0 \end{bmatrix}^{T} \\[2mm]
\;=\;& C^{T} \\[2mm]
\;=\;& \begin{bmatrix} -\cos(Lon)\sin(Lat) & -\sin(Lon) & \cos(Lon)\cos(Lat) \\ -\sin(Lon)\sin(Lat) & \cos(Lon) & \sin(Lon)\cos(Lat) \\ \cos(Lat) & 0 & \sin(Lat) \end{bmatrix}
\end{aligned}
$$

$$\cdots \quad (86)$$

As does Expression (72), Expression (86) includes no term relating to movement of the origin. It can also be said that Expression (86) indicates what would be done if a relative position vector in the ground surface coordinate system was displayed as a component of the ECEF coordinate system.

Strictly speaking, there is a difference that the concept of the distance in the ground surface coordinate system is on the basis of movement constrained to the ground surface, whereas the concept of the distance in the ECEF coordinate system is a linear distance not constrained to the ground surface. Furthermore, since the earth is not a strict sphere, the radius of curvature in the prime vertical and the radius of curvature in the meridian are considered when more accurate calculation is performed.

The positioning device according to the ninth embodiment performs processing on the basis of two assumptions. The first assumption is that a mobile object such as a ship as a positioning target moves in parallel with an $x_{surf}$-$y_{surf}$ plane of the ground surface coordinate system. The second assumption is that the ship oscillates in the $z_{surf}$ direction of the ground surface coordinate system due to the influence of waves.

The velocity associated with the movement and oscillation of the ship is represented by the following symbols.

$$
\delta v_{surf} \;=\; [\delta v_{surf\_x}, \quad \delta v_{surf\_y}, \quad \delta v_{surf\_z}]^{T} \qquad \cdots \quad (87)
$$

In general, the Greek letter $\delta$ represents "minute", "difference", or "error". Since the velocity associated with the movement and oscillation of the ship is a minute error with respect to the velocity of the satellite, the Greek letter $\delta$ is used for

the velocity ($\delta$v) associated with the movement and oscillation of the ship.

The influence on the FDOA ($\delta$FDOA) exerted by the velocity ($\delta$v) associated with the movement and oscillation of the ship is derived as follows from Expression (58) indicating the FDOA.

$$\delta FDOA(\boldsymbol{p}_t, \ \boldsymbol{p}_{\text{sat2}}, \ \boldsymbol{v}_{sat2}) \ = \ \frac{1}{\lambda}\left\{\frac{(\boldsymbol{v}_{s1} + \boldsymbol{C}^{-1}\delta\boldsymbol{v}_{\text{surf}})^T(\boldsymbol{p}_t - \boldsymbol{p}_{s1})}{\|\boldsymbol{p}_t - \boldsymbol{p}_{s1}\|} - \frac{(\boldsymbol{v}_{s2} + \boldsymbol{C}^{-1}\delta\boldsymbol{v}_{\text{surf}})^T(\boldsymbol{p}_t - \boldsymbol{p}_{s2})}{\|\boldsymbol{p}_t - \boldsymbol{p}_{s2}\|}\right\}$$

$$- \frac{1}{\lambda}\left\{\frac{\boldsymbol{v}_{s1}^T(\boldsymbol{p}_t - \boldsymbol{p}_{s1})}{\|\boldsymbol{p}_t - \boldsymbol{p}_{s1}\|} - \frac{\boldsymbol{v}_{s2}^T(\boldsymbol{p}_t - \boldsymbol{p}_{s2})}{\|\boldsymbol{p}_t - \boldsymbol{p}_{s2}\|}\right\}$$

$$= \ \frac{1}{\lambda}(\boldsymbol{C}^{-1}\delta\boldsymbol{v}_{\text{surf}})^T\left\{\frac{(\boldsymbol{p}_t - \boldsymbol{p}_{s1})}{\|\boldsymbol{p}_t - \boldsymbol{p}_{s1}\|} - \frac{(\boldsymbol{p}_t - \boldsymbol{p}_{s2})}{\|\boldsymbol{p}_t - \boldsymbol{p}_{s2}\|}\right\}$$

$$\ldots \quad (88)$$

The error variance value ($\sigma^2_{\text{FDOA\_mv}}$) of FDOA generated by the velocity ($\delta$v) accompanying the movement and oscillation of the ship can be obtained as an expected value of the square of $\delta$FDOA.

$$\sigma_{\text{FDOA\_mv}}^2 \ = \ E\{\delta FDOA^2(\boldsymbol{p}_t, \ \boldsymbol{p}_{\text{sat2}}, \ \boldsymbol{v}_{sat2})\}$$

$$= \ \frac{1}{\lambda^2}\left\{\frac{(\boldsymbol{p}_t - \boldsymbol{p}_{s1})}{\|\boldsymbol{p}_t - \boldsymbol{p}_{s1}\|} - \frac{(\boldsymbol{p}_t - \boldsymbol{p}_{s2})}{\|\boldsymbol{p}_t - \boldsymbol{p}_{s2}\|}\right\}^T \boldsymbol{C}^T \overbrace{E\{\delta\boldsymbol{v}_{\text{surf}}\delta\boldsymbol{v}_{\text{surf}}^T\}}^{\boldsymbol{P}_{\text{v\_surf}}} \boldsymbol{C}\left\{\frac{(\boldsymbol{p}_t - \boldsymbol{p}_{s1})}{\|\boldsymbol{p}_t - \boldsymbol{p}_{s1}\|} - \frac{(\boldsymbol{p}_t - \boldsymbol{p}_{s2})}{\|\boldsymbol{p}_t - \boldsymbol{p}_{s2}\|}\right\}$$

$$= \ \frac{1}{\lambda^2}\left\{\frac{(\boldsymbol{p}_t - \boldsymbol{p}_{s1})}{\|\boldsymbol{p}_t - \boldsymbol{p}_{s1}\|} - \frac{(\boldsymbol{p}_t - \boldsymbol{p}_{s2})}{\|\boldsymbol{p}_t - \boldsymbol{p}_{s2}\|}\right\}^T \boldsymbol{C}^T \boldsymbol{P}_{\text{v\_surf}}\boldsymbol{C}\left\{\frac{(\boldsymbol{p}_t - \boldsymbol{p}_{s1})}{\|\boldsymbol{p}_t - \boldsymbol{p}_{s1}\|} - \frac{(\boldsymbol{p}_t - \boldsymbol{p}_{s2})}{\|\boldsymbol{p}_t - \boldsymbol{p}_{s2}\|}\right\}$$

wherein

$$\boldsymbol{P}_{\text{v\_surf}} \ := \ E\{\delta\boldsymbol{v}_{\text{surf}}\delta\boldsymbol{v}_{\text{surf}}^t\}$$

$$\ldots \quad (89)$$

Here, $P_{\text{v\_surf}}$ may be obtained by a statistical method or may be given as a setting parameter.

The error covariance matrix of the FDOA caused by the velocity ($\delta$v) accompanying the movement and oscillation of the ship is given by the following expression.

$$\boldsymbol{P}_{\text{TDFD\_mv}} \ := \ \text{diag}\{0, \ \sigma_{\text{FDOA\_mv}}^2\} \qquad \ldots \quad (90)$$

Instead of Expression (81) of the eighth embodiment, the positioning device according to the ninth embodiment regards a matrix ($P_{\text{TDFD}}$) obtained by the following expression as an overall error covariance matrix.

$$\overset{\text{Added in}}{\underset{\text{ninth embodiment}}{}}$$

$$\boldsymbol{P}_{\text{TDFD}} \ = \ \boldsymbol{R}_{\text{TDFD}} + \boldsymbol{M}(\boldsymbol{X}_t, \ \boldsymbol{p}_{\text{sat2}})\boldsymbol{P}_{\text{DOA}}\boldsymbol{M}^T(\boldsymbol{X}_t, \ \boldsymbol{p}_{\text{sat2}}) + \overbrace{\boldsymbol{P}_{\text{TDFD\_mv}}} \quad \ldots \quad (91)$$

The "presence expected area" according to the ninth embodiment can be defined by applying the overall error covariance matrix ($P_{\text{TDFD}}$) obtained by Expression (91) to Inequality (85).

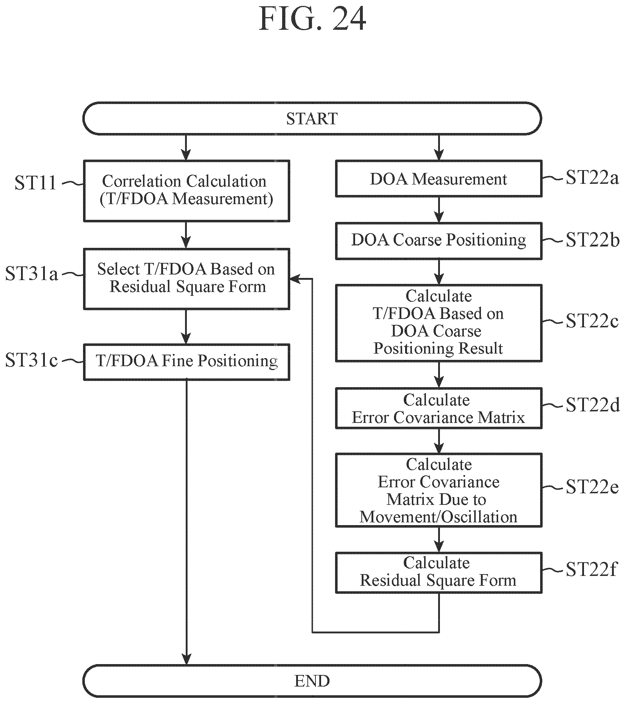

FIG. 24 is a flowchart illustrating a processing flow of the positioning device according to the ninth embodiment. When FIG. 20 according to the eighth embodiment is compared with FIG. 24 according to the ninth embodiment, there is only one difference. In addition to the processing flow according to the eighth embodiment, step ST22e of calculating an error covariance matrix due to movement and oscillation is newly added to the processing flow of the positioning device according to the ninth embodiment. Expressions (86) to (90) described in the ninth embodiment are expressions required in step ST22e for calculating an error covariance matrix due to movement and oscillation.

In the positioning device according to the ninth embodiment, in addition to the configuration of the positioning device according to the eighth embodiment, the error covariance matrix of FDOA generated by the velocity ($\delta$v) accompanying movement and oscillation of the ship is added in the calculation of the overall error covariance matrix.

Since the positioning device according to the ninth embodiment has the above-described configuration, in addition to the effects described in the above-described embodiments, there is an effect that the "presence expected area" can be calculated systematically and the ambiguity can be eliminated in consideration of a measurement error caused by movement and oscillation of the ship.

Tenth Embodiment not according to the invention

A positioning device according to a tenth embodiment is a modification of the positioning device according to the eighth embodiment. The positioning device according to the eighth embodiment is a positioning device that performs positioning from information of TDOA and FDOA using at least two satellites. When the number of satellites that can be used for positioning is three or more, positioning can be performed only with TDOA information. The positioning device according to the tenth embodiment performs positioning only with TDOA information when the number of satellites that can be used for positioning is three or more.

Note that, hereinafter, for the sake of simplicity, only parts of the mathematical expressions for the three satellites #1, #2, and #3 are described, but the mathematical expressions can be generalized and applied even if the number of satellites increases.

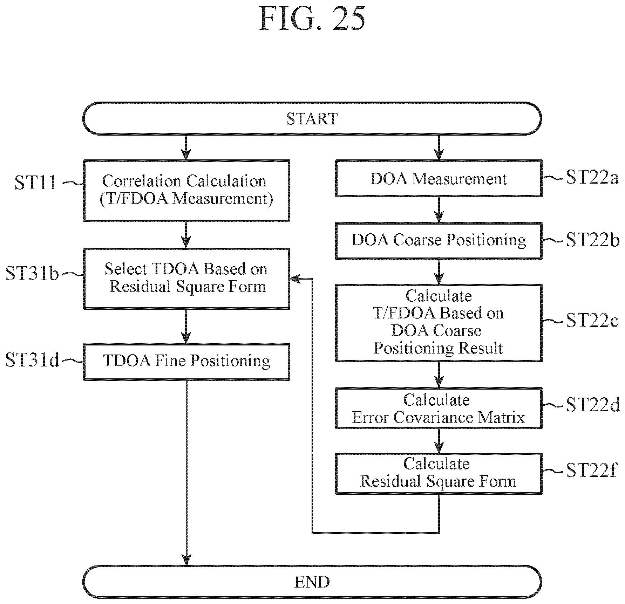

FIG. 25 is a flowchart illustrating a processing flow of the positioning device according to the tenth embodiment. When FIG. 20 according to the eighth embodiment is compared with FIG. 25 according to the tenth embodiment, there is almost no difference therebetween. A part indicated as "T/FDOA" in the processing flow of the positioning device according to the eighth embodiment is indicated as "TDOA" in the processing flow of the positioning device according to the tenth embodiment.

Expression (56) representing the true value described in the eighth embodiment is as follows in the tenth embodiment.

$$\boldsymbol{h}_{\mathrm{TDOA}}(\boldsymbol{p}_t, \quad \boldsymbol{p}_{\mathrm{sat2}}) \;=\; \begin{bmatrix} TDOA_{12}(\boldsymbol{p}_t, & \boldsymbol{p}_{\mathrm{sat2}}) \\ TDOA_{23}(\boldsymbol{p}_t, & \boldsymbol{p}_{\mathrm{sat2}}) \\ \vdots \end{bmatrix} \qquad \cdots \quad (9\,2)$$

Note that each element on the right side of Expression (92) is expressed in Expressions (1), (3), and the like.

Expression (59) representing the error covariance matrix ($R_{\mathrm{TDFD}}$) described in the eighth embodiment is as follows in the tenth embodiment.

$$\begin{aligned} E\{\boldsymbol{n}_{\mathrm{TDOA}}\boldsymbol{n}_{\mathrm{TDOA}}{}^T\} \;&=\; \mathrm{diag}\{\sigma_{\mathrm{TDOA\_12}}{}^2, \quad \sigma_{\mathrm{FDOA\_23}}{}^2, \quad \cdots\} \\ &=:\; \boldsymbol{R}_{\mathrm{TDOA}} \end{aligned} \qquad \cdots \quad (9\,3)$$

The positioning device according to the eighth embodiment obtains the "presence expected area" in the TDOA-FDOA space illustrated in FIG. 19. The positioning device according to the tenth embodiment cannot use the information of FDOA, but is only required to obtain the "presence expected area" in the TDOA space including $TDOA_{12}$, $TDOA_{23}$, ... instead of the TDOA-FDOA space. Inequality (85) representing the presence expected area described in the eighth embodiment is as follows in the tenth embodiment.

$$\left(\boldsymbol{z}_{\mathrm{TDOA}} - \begin{bmatrix} TDOA_{12\_\mathrm{DOA}} \\ TDOA_{23\_\mathrm{DOA}} \\ \vdots \end{bmatrix}\right)^T \boldsymbol{P}_{\mathrm{TDOA}}{}^{-1} \left(\boldsymbol{z}_{\mathrm{TDOA}} - \begin{bmatrix} TDOA_{12\_\mathrm{DOA}} \\ TDOA_{23\_\mathrm{DOA}} \\ \vdots \end{bmatrix}\right) \;<\; \gamma^2 \qquad \cdots \quad (9\,4)$$

Since the positioning device according to the tenth embodiment has the above-described configuration, positioning can be performed only with TDOA information in a case where the number of usable satellites is three or more, and the effects described in the above-described embodiments are obtained.

Note that combinations of the individual embodiments, modifications of any components of the individual embodiments, or omissions of any components in the individual embodiments are possible.

INDUSTRIAL APPLICABILITY

The present disclosure technology can be applied to satellite positioning and the like, and has industrial applicability.

REFERENCE SIGNS LIST

1: receiving antenna, 2: receiving unit, 3: cross-correlation processing unit, 4: TDOA calculating unit, 5: TDOA positioning processing unit, 6: DOA estimation processing unit, 7: DOA positioning processing unit, 8: ambiguity handling unit, 9: positioning result output unit, 10: centroid value calculating unit, 11: FDOA calculating unit, 12: FDOA positioning processing unit, 13: TDFD calculating unit, 14: TDFD positioning processing unit, 15: TDOA range calculating unit, 16: FDOA range calculating unit, 17: TDFD range calculating unit, 100: processor, 101: memory, 102: display

**Claims**

**1.**   A positioning device, comprising:

a receiving unit (2) to receive at least three reception signals of at least three receiving antennas (1) corresponding to at least three satellites that each receive a pulse radar wave as a transmission wave of a positioning target wherein the position of each of the at least three satellites is known;
a cross-correlation processing unit (3) to calculate cross-correlation for all combinations of any two of the reception signals of the receiving antennas (1);
a TDOA calculating unit (4) to calculate a TDOA by referring to a peak of cross-correlation;
a TDOA positioning processing unit (5) to perform TDOA positioning by referring to the TDOA;
a DOA estimation processing unit (6) to estimate a DOA from a reception signal received by an array antenna provided on at least one satellite of the at least three satellites;
a DOA positioning processing unit (7) to perform DOA positioning by referring to the estimated DOA;
a TDOA range calculating unit (15) to set a range of the TDOA by referring to a result of the DOA positioning processing unit, wherein
the TDOA range calculating unit sets a range of the TDOA with a TDOA-width being equal to or less than PRI, the PRI being Pulse-Repetition-Interval of the pulse radar wave of a transmission source as the positioning target, and
the TDOA calculating unit (4) calculates TDOA within the set range of the TDOA.

**Patentansprüche**

**1.**   Positionierungseinrichtung, umfassend:

eine Empfangseinheit (2) zum Empfangen von mindestens drei Empfangssignalen von mindestens drei Empfangsantennen (1), die mindestens drei Satelliten entsprechen, die jeweils eine Impulsradarwelle als Übertragungswelle eines Positionierungsziels empfangen, wobei die Position jedes der mindestens drei Satelliten bekannt ist;
eine Kreuzkorrelationsverarbeitungseinheit (3) zum Berechnen einer Kreuzkorrelation für alle Kombinationen von zwei beliebigen der Empfangssignale der Empfangsantennen (1);
eine TDOA-Berechnungseinheit (4) zum Berechnen einer TDOA durch Bezugnahme auf eine Spitze einer Kreuzkorrelation;
eine TDOA-Positionsverarbeitungseinheit (5) zum Durchführen einer TDOA-Positionierung unter Bezugnahme auf die TDOA;
eine DOA-Ermittlungsverarbeitungseinheit (6) zum Ermitteln einer DOA aus einem Empfangssignal, das von einer Gruppenantenne empfangen wird, die auf mindestens einem der mindestens drei Satelliten vorgesehen ist;
eine DOA-Positionsverarbeitungseinheit (7) zum Durchführen einer DOA-Positionierung unter Bezugnahme auf die ermittelte DOA;
eine TDOA-Bereichsberechnungseinheit (15) zum Einstellen eines Bereichs der TDOA durch Bezugnahme auf ein Ergebnis der DOA-Positionsverarbeitungseinheit, wobei
die TDOA-Bereichsberechnungseinheit einen Bereich der TDOA mit einer TDOA-Breite einstellt, die gleich oder kleiner als das PRI ist, wobei PRI das Impulsfolgeintervall der Impulsradarwelle einer Übertragungsquelle als Positionierungsziel ist, und
die TDOA-Berechnungseinheit (4) die TDOA innerhalb des eingestellten Bereichs der TDOA berechnet.

**Revendications**

1. Dispositif de positionnement, comprenant :

   une unité de réception (2) pour recevoir au moins trois signaux de réception d'au moins trois antennes de réception (1) correspondant à au moins trois satellites qui reçoivent chacun une onde radar à impulsions en tant qu'onde de transmission d'une cible de positionnement, dans lequel la position de chacun des au moins trois satellites est connue ;
   une unité de traitement de corrélation croisée (3) pour calculer une corrélation croisée pour toutes les combinaisons de deux quelconques des signaux de réception des antennes de réception (1) ;
   une unité de calcul de TDOA (4) pour calculer une TDOA en se référant à un pic de corrélation croisée ;
   une unité de traitement de positionnement de TDOA (5) pour effectuer un positionnement de TDOA en se référant à la TDOA ;
   une unité de traitement d'estimation de DOA (6) pour estimer une DOA à partir d'un signal de réception reçu par une antenne réseau fournie sur au moins un satellite des au moins trois satellites ;
   une unité de traitement de positionnement de DOA (7) pour effectuer un positionnement de DOA en se référant à la DOA estimée ;
   une unité de calcul de plage de TDOA (15) pour définir une plage de la TDOA en se référant à un résultat de l'unité de traitement de positionnement de DOA, dans lequel
   l'unité de calcul de plage de TDOA définit une plage de la TDOA avec une largeur de TDOA égale ou inférieure au PRI, le PRI étant l'intervalle de répétition d'impulsion de l'onde radar à impulsions d'une source de transmission en tant que cible de positionnement, et
   l'unité de calcul de TDOA (4) calcule la TDOA dans la plage de la TDOA définie.

# FIG. 1

Radar Wave, Communication Wave

Satellite
#1  #2  #3

TDOA Line

FDOA Line

Ground Station

Correlation Processing

Position of Positioning Target
(Intersection of
TDOA Line and FDOA Line)

Positioning

# FIG. 2

100

102

101

# FIG. 3

EP 4 336 207 B1

# FIG. 4

```
                        ┌─────────────────────────────────┐
                        │              START              │
                        └─────────────────────────────────┘
                              │                    │
                              ▼                    ▼
              ST11 ┌──────────────────┐  ┌──────────────────┐ ST21
                   │                  │  │                  │
                   └──────────────────┘  └──────────────────┘
                              │                    │
                              ▼                    ▼
              ST12 ┌──────────────────┐  ┌──────────────────┐ ST22
                   │                  │  │                  │
                   └──────────────────┘  └──────────────────┘
                              │                    │
                              ▼                    │
              ST13 ┌──────────────────┐            │
                   │                  │            │
                   └──────────────────┘            │
                              │                    │
         ┌────────────────────▼                    │
         │    ┌──────────────────┐                 │
    ST14 │    │                  │                 │
         │    └──────────────────┘                 │
         │              │                          │
    ST15 │         NO  ◇ ◇                         │
         └──────────────  ◇                        │
                         │YES                       │
                         ▼                          ▼
              ┌───────────────────────────────────────┐ ST31
              │                                       │
              └───────────────────────────────────────┘
                              │
                              ▼
              ┌───────────────────────────────────────┐ ST32
              │                                       │
              └───────────────────────────────────────┘
                              │
                              ▼
              ┌───────────────────────────────────────┐
              │                  END                  │
              └───────────────────────────────────────┘
```

# FIG. 5

# FIG. 6

FIG. 7

EP 4 336 207 B1

# FIG. 8

FIG. 9

# FIG. 10

```
                        START

   ST11                              ST21

   ST12                              ST22

   ST13B                         ST23
                                        NO

                    ST15
         NO                      YES

              YES        ST24

   ST31

   ST32

                         END
```

# FIG. 11

EP 4 336 207 B1

# FIG. 12

FIG. 13

✕ : True Position

✳ : Positioning Point (Positioning Ambiguity)

Longitude [deg.E]

# FIG. 14

✕ : True Position
✱ : Positioning Point (Positioning Ambiguity)
+ : Positioning Result by DOA
◯ : Positioning Result after Handling Ambiguity

Longitude [deg.E]

Error from True Value: 4.3 km

## FIG. 15

# FIG. 16

FIG. 17

EP 4 336 207 B1

# FIG. 18

FIG. 19

□ T/FDOA Measurement Value

○
T/FDOA Estimation Value
From DOA Coarse Positioning

T/FDOA Measurement Value
Ambiguity Exists on Outside

FDOA [Hz]

TDOA [sec]

# FIG. 20

```
                          START

ST11 — Correlation Calculation          DOA Measurement — ST22a
       (T/FDOA Measurement)

                                         DOA Coarse Positioning — ST22b

ST31a — Select T/FDOA Based on           Calculate
        Residual Square Form             T/FDOA Based on
                                         DOA Coarse — ST22c
                                         Positioning Result

ST31c — T/FDOA Fine Positioning          Calculate
                                         Error Covariance Matrix — ST22d

                                         Calculate
                                         Residual Square Form — ST22f

                          END
```

FIG. 21B

TDOA/FDOA

FIG. 21A

TDOA/FDOA

## FIG. 22A

Estimated location by DOA and T/FDOA

## FIG. 22B

Estimated location by DOA and T/FDOA

# FIG. 23

# FIG. 24

# FIG. 25

```
                        START

ST11 ─  Correlation Calculation          DOA Measurement      ─ ST22a
        (T/FDOA Measurement)

                                        DOA Coarse Positioning ─ ST22b

ST31b ─ Select TDOA Based on              Calculate
        Residual Square Form            T/FDOA Based on
                                        DOA Coarse            ─ ST22c
                                        Positioning Result

ST31d ─ TDOA Fine Positioning             Calculate
                                        Error Covariance Matrix ─ ST22d

                                          Calculate           ─ ST22f
                                        Residual Square Form

                         END
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **D. P. HAWORTH et al.** Interference Localization For Eutelsat Satellites -The First European Transmitter Location System. *International Journal of Satellite Communications*, 1997, vol. 15, 155-183
- **DARIO BENVENUTI**. Genetic Algorithms for PRI ambiguity resolution in Passive Emitter Tracking. *2009 European Radar Conference (EuRAD), Rome, Italy*, 2009, 117-120

- **LI ZHENQUIANG et al.** A method to eliminate TDOA ambiguity based on FDOA and FDOA-rate. *2015 International Conference on Wireless Communications & Signal Processing (WCSP), Nanjing, China*, 2015, 1-5